(19) Europäisches Patentamt
European Patent Office
Office européen des brevets

(11) **EP 4 561 070 A1**

(12) **EUROPEAN PATENT APPLICATION**
published in accordance with Art. 153(4) EPC

(43) Date of publication:
**28.05.2025 Bulletin 2025/22**

(21) Application number: **23841846.1**

(22) Date of filing: **27.04.2023**

(51) International Patent Classification (IPC):
**H04N 19/186** (2014.01)

(52) Cooperative Patent Classification (CPC):
**H04N 19/182; H04N 19/186; H04N 19/88**

(86) International application number:
**PCT/CN2023/091040**

(87) International publication number:
**WO 2024/016775 (25.01.2024 Gazette 2024/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.07.2022 CN 202210849250**

(71) Applicant: **Tencent Technology (Shenzhen)
Company Limited
Shenzhen, Guangdong 518057 (CN)**

(72) Inventors:
• **ZHANG, Han**
  **Shenzhen, Guangdong 518057 (CN)**
• **ZHANG, Hongbin**
  **Shenzhen, Guangdong 518057 (CN)**
• **KUANG, Wei**
  **Shenzhen, Guangdong 518057 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **DATA PROCESSING METHOD AND APPARATUS, AND DEVICE**

(57)   Embodiments of this application provide a data processing method and apparatus, and a device. The method includes: determining classification mode information corresponding to a to-be-encoded block in video data, the classification mode information including an extended co-located luma reconstructed pixel and a target classification mode corresponding to a color component pixel in the to-be-encoded block, and the extended co-located luma reconstructed pixel belonging to a target region centered on a true co-located luma reconstructed pixel of the color component pixel; determining an edge class corresponding to the color component pixel based on the extended co-located luma reconstructed pixel and the target classification mode; and offsetting a reconstructed pixel of the color component pixel based on the edge class to obtain an offset reconstructed pixel, and performing encoding processing on the to-be-encoded block based on the offset reconstructed pixel. According to the embodiments of this application, class accuracy of edge offset corresponding to the color component pixel can be improved, thereby improving overall encoding performance for the video data.

FIG. 9

**Description**

This application claims priority to Chinese Patent Application No. 2022108492507, filed with the China National Intellectual Property Administration on July 19, 2022 and entitled "DATA PROCESSING METHOD AND APPARATUS, AND DEVICE", which is incorporated herein by reference in its entirety.

FIELD OF THE TECHNOLOGY

This application relates to the field of data processing technologies, and specifically, to a video coding technology.

BACKGROUND

To transmit video data, the video data usually needs to be encoded and compressed. The compressed video data may be referred to as a video bitstream. The video bitstream is transmitted to a user side through a wired or wireless network, and then decoded for viewing. An entire video coding procedure may include processes such as block division, prediction, transform, quantization, and coding. In a video coding stage, after a whole frame of image is reconstructed, a pixel value in the reconstructed image may be filtered and offset to adjust the pixel value in the reconstructed image, to further improve image quality. However, in an existing offset method for video coding, a position of a co-located luma component used in classification is fixed. As a result, final class accuracy is too low, affecting overall coding performance for the video data.

SUMMARY

Embodiments of this application provide a data processing method and apparatus, and a device, which can improve class accuracy of edge offset corresponding to a color component pixel, thereby improving overall encoding performance for video data.

According to an aspect of the embodiments of this application, a data processing method is provided, and is performed by a computer device. The method includes:

determining classification mode information corresponding to a to-be-encoded block in video data, the classification mode information including an extended co-located luma reconstructed pixel and a target classification mode corresponding to a color component pixel in the to-be-encoded block, the extended co-located luma reconstructed pixel belonging to a target region centered on a true co-located luma reconstructed pixel of the color component pixel;

determining an edge class corresponding to the color component pixel based on the extended co-located luma reconstructed pixel and the target classification mode; and

offsetting a reconstructed pixel of the color component pixel based on the edge class to obtain an offset reconstructed pixel, and performing encoding processing on the to-be-encoded block based on the offset reconstructed pixel.

According to an aspect of the embodiments of this application, a data processing method is provided, and is performed by a computer device. The method includes:

performing decoding processing on a to-be-decoded block in video data to obtain classification mode information corresponding to the to-be-decoded block; the classification mode information including an extended co-located luma reconstructed pixel and a target classification mode corresponding to a color component pixel in the to-be-decoded block, the extended co-located luma reconstructed pixel belonging to a target region centered on a true co-located luma reconstructed pixel of the color component pixel;

determining an edge class corresponding to the color component pixel based on the extended co-located luma reconstructed pixel and the target classification mode; and

reconstructing the color component pixel in the to-be-decoded block based on an offset corresponding to the edge class.

According to an aspect of the embodiments of this application, a data processing apparatus is provided. The apparatus includes:

a classification mode information determining module, configured to determine classification mode information corresponding to a to-be-encoded block in video data, the classification mode information including an extended co-located luma reconstructed pixel and a target classification mode corresponding to a color component pixel in the to-be-encoded block, the extended co-located luma reconstructed pixel belonging to a target region centered on a true co-located luma reconstructed pixel of the color component pixel;

a first class determining module, configured to determine an edge class corresponding to the color component pixel based on the extended co-located luma reconstructed pixel and the target classification mode; and

an encoding processing module, configured to: offset a reconstructed pixel of the color component pixel based on the edge class to obtain an offset reconstructed pixel, and perform encoding processing on the to-be-encoded block based on the offset reconstructed pixel.

According to an aspect of the embodiments of this application, a data processing apparatus is provided. The apparatus includes:

a decoding processing module, configured to perform decoding processing on a to-be-decoded block in video data to obtain classification mode information corresponding to the to-be-decoded block; the classification mode information including an extended co-located luma reconstructed pixel and a target classification mode corresponding to a color component pixel in the to-be-decoded block, the extended co-located luma reconstructed pixel belonging to a target region centered on a true co-located luma reconstructed pixel of the color component pixel;

a second class determining module, configured to determine an edge class corresponding to the color component pixel based on the extended co-located luma reconstructed pixel and the target classification mode; and

a pixel reconstruction module, configured to reconstruct the color component pixel in the to-be-decoded block based on an offset corresponding to the edge class.

According to an aspect of the embodiments of this application, a computer device is provided, including: a memory and a processor, the memory being connected to the processor, the memory being configured to store a computer program, and the processor being configured to invoke the computer program, to cause the computer device to perform the method according to any one of the foregoing aspects in the embodiments of this application.

According to an aspect of the embodiments of this application, a computer-readable storage medium is provided, storing a computer program, the computer program being loaded and executed by a processor, to cause a computer device having the processor to perform the method according to any one of the foregoing aspects in the embodiments of this application.

According to an aspect of this application, a computer program product or a computer program is provided, the computer program product or the computer program including computer instructions, and the computer instructions being stored in a computer-readable storage medium. A processor of a computer device reads the computer instructions from the computer-readable storage medium, and executes the computer instructions, so that the computer device performs the method according to any one of the foregoing aspects.

In the embodiments of this application, when encoding processing is performed on video data, classification mode information corresponding to a to-be-encoded block in the video data may be determined, the classification mode information including an extended co-located luma reconstructed pixel and a target classification mode corresponding to a color component pixel in the to-be-encoded block, and the extended co-located luma reconstructed pixel belonging to a target region centered on a true co-located luma reconstructed pixel of the color component pixel. In this way, an edge class corresponding to the color component pixel may be determined based on the extended co-located luma reconstructed pixel and the target classification mode; and a reconstructed pixel of the color component pixel is offset based on the edge class to obtain an offset reconstructed pixel, and encoding processing is performed on the to-be-encoded block based on the offset reconstructed pixel. It can be learned that, in an encoding stage of the video data, the extended co-located luma reconstructed pixel may be introduced for edge classification, thereby improving the class accuracy of the edge offset corresponding to the color component pixel, and improving the overall encoding performance for the video data.

BRIEF DESCRIPTION OF THE DRAWINGS

FIG. 1 is a schematic structural diagram of an encoding framework according to an embodiment of this application.

FIG. 2 is a schematic flowchart of loop filtering according to an embodiment of this application.

FIG. 3 is a basic schematic flowchart of cross-component sample adaptive offset according to an embodiment of this application.

FIG. 4 is a schematic diagram of a position of a band class classification sample in cross-component sample adaptive offset according to an embodiment of this application.

FIG. 5 is a schematic diagram of a classification mode of an edge class in cross-component sample adaptive offset according to an embodiment of this application.

FIG. 6 is a schematic diagram of a framework of cross-component adaptive loop filtering according to an embodiment of this application.

FIG. 7 is a schematic diagram of a shape of a filter of cross-component adaptive loop filtering according to an embodiment of this application.

FIG. 8 is a schematic structural diagram of a data processing system according to an embodiment of this application.

FIG. 9 is a schematic flowchart of a data processing method according to an embodiment of this application.

FIG. 10 is a schematic diagram of a selection region of an extended co-located luma reconstructed pixel according to an embodiment of this application.

FIG. 11 is a schematic diagram of an extended classification mode according to an embodiment of this application.

FIG. 12 is a schematic diagram of a mode coverage range of an extended co-located luma reconstructed pixel according to an embodiment of this application.

FIG. 13 is a schematic diagram of a position of an extended co-located luma reconstructed pixel and a corresponding classification mode according to an embodiment of this application.

FIG. 14 is a schematic diagram of using a coverage range to fill an unavailable region of an extended co-located luma reconstructed pixel according to an embodiment of this application.

FIG. 15 is a schematic flowchart of another data processing method according to an embodiment of this application.

FIG. 16 is a schematic structural diagram of a data processing apparatus according to an embodiment of this application.

FIG. 17 is a schematic structural diagram of another data processing apparatus according to an embodiment of this application.

FIG. 18 is a schematic structural diagram of a computer device according to an embodiment of this application.

DESCRIPTION OF EMBODIMENTS

The technical solutions in the embodiments of this application are clearly and completely described below with reference to accompanying drawings in the embodiments of this application. Apparently, the described embodiments are merely some rather than all of the embodiments of this application. All other embodiments obtained by a person of ordinary skill in the art based on the embodiments of this application without creative efforts shall fall within the protection scope of this application.

To more clearly understand the technical solutions of the embodiments of this application, basic concepts involved in the embodiments of this application are first described below.

Video coding: It refers to a process of coding pixels in an image frame of video data to obtain an encoded bitstream (which may also be referred to as a video bitstream), or may refer to a process of converting a file in a particular video format into a file in another video format by using a specific compression technology. The embodiments of this application provide technical solutions based on an enhanced compression model (ECM) in an existing video coding technology. The ECM improves a loop filtering part of versatile video coding (VVC), that is, additionally introduces a variety of loop filters in addition to continuing use an existing loop filter in the VVC. A encoding framework of the ECM and a loop filtering process of the ECM are described below.

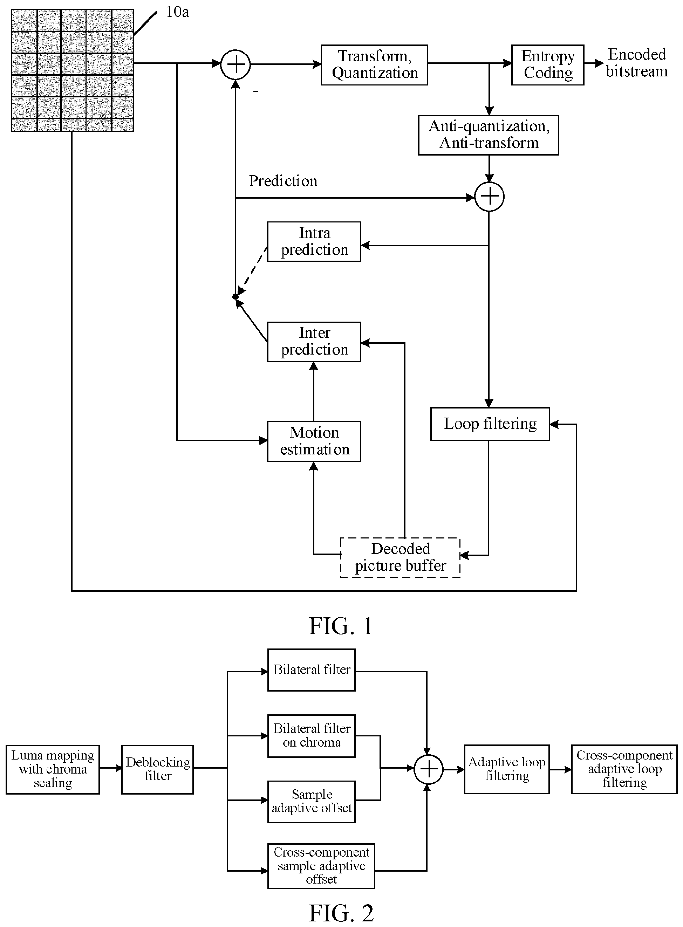

FIG. 1 is a schematic structural diagram of an encoding framework according to an embodiment of this application. The encoding framework shown in FIG. 1 is a block-based hybrid encoding framework. An entire image frame (for example, an image frame 10a) in video data may be divided into a plurality of blocks (which, for example, may be a coding tree block (CTB), or a coding tree unit (CTU)), and coding processes such as prediction, transform, quantization, loop filtering, and entropy coding are performed in units of blocks. Each block has a corresponding coding parameter.

The prediction may refer to not directly coding a current signal (namely, an object that needs to be coded, for example, an image frame, a block, or a to-be-encoded pixel), but predicting the current signal by using one or more previous signals and then performing coding based on a difference between an actual value and a predicted value to implement coding. The prediction may include intra prediction and inter prediction.

The intra prediction refers to predicting a pixel value in a current to-be-encoded block based on adjacent pixels that have been coded, to effectively remove spatial redundancy in the video data.

The inter prediction is to use pixels of adjacent coded image frames to predict a pixel of a current to-be-encoded image frame by using a time domain correlation of the video data, to remove time domain redundancy in the video data. An inter prediction process mainly involves motion estimation and motion compensation. The motion estimation refers to finding an optimal matching reference block of a current to-be-encoded block in a reference image frame (a coded image frame), and using a motion vector to represent a position relationship between the optimal matching reference block and the current to-be-encoded block (any block in a to-be-encoded image frame that needs to be coded, that is, a block that has not been encoded). The motion compensation refers to performing coding transmission on the difference between the optimal matching reference block and the current to-be-encoded block.

The transform refers to performing orthogonal transformation on a to-be-encoded image frame in the video data to remove the correlation between spatial pixels. The orthogonal transformation causes the energy originally distributed on each pixel to be concentrated on a few low-frequency coefficients in frequency domain, which represents most information of the image. This characteristic of the frequency coefficient is conducive to the use of a quantification method based on a human visual system (HVS). A transformation manner may include, but is not limited to: Karhunen-Loeve transform, discrete cosine transform (DCT), and discrete wavelet transformation (DWT).

The quantization refers to a process of reducing precision of video data representation. The amount of data that needs to be coded can be reduced through quantization. Quantization is a lossy compression technology. The quantization may include vector quantization and scalar quantization. The vector quantization is joint quantization for a set of data, and the scalar quantization is independent quantization for each input data.

The loop filtering can remove or reduce various types of coding distortions generated during coding in units of blocks, such as a blocking effect, a ringing effect, an image content texture or excessive smoothing of boundaries caused by discontinuities in the boundaries between blocks. Specifically, a quantization process for the to-be-encoded image frame after transformation is a lossy process, resulting in a loss of information in the video data. There is an error between a restored block (which may be referred to as a reconstructed block) obtained through inverse quantization (InvQuantization) and inverse transform (InvTransform) and an original block. Consequently, a finally restored image frame (a reconstructed image frame) may appear to be blocky. The blocky image frame greatly affects prediction of a subsequent image frame. Therefore, loop filtering may be performed for deblocking.

A decoded picture buffer is configured to store all reconstructed image frames in a coding stage.

The entropy coding refers to a manner of performing code rate compression by using information entropy of a source, which can remove statistical redundant information that still exists after prediction and transformation. The entropy coding can improve a video compression ratio, and the entropy coding is lossless compression, so that video data compressed through the entropy coding may be reconstructed into original video data without distortion at a decoder side. A commonly used entropy coding method may include, but is not limited to: variable-length coding and content adaptive binary arithmetic coding (CABAC).

The variable-length coding may use codewords of different lengths to represent a difference (namely, a difference between a reconstructed pixel value obtained through loop filtering and an original pixel value in the to-be-encoded block, where the original pixel value is any pixel value in the to-be-encoded block) or a coefficient that needs to be encoded. A code length needs to be designed based on a probability of occurrence of a symbol. For example, a short codeword is allocated to a residual or a coefficient with a high probability of occurrence, and a long codeword is allocated to a residual or a coefficient with a low probability of occurrence. Commonly used variable-length coding includes exp-Golomb coding and arithmetic coding.

The CABAC may include the following operations:

1. Binaryzation: The CABAC uses binary arithmetic coding, which means that only two numbers (1 or 0) are coded. A non-binary numerical symbol, for example, a conversion coefficient or a motion vector, is binarized or converted into a binary codeword before arithmetic coding. This process is similar to converting a numerical value into a variable-length codeword, but the binary codeword is further coded by an arithmetic coder before transmission.

2. Context model selection: A context model is a probabilistic model that is selected based on a statistic of the most recently coded data symbol. This model stores a probability that each "bin" is either 1 or 0.

3. Arithmetic coding: An arithmetic coder codes each "bin" based on a selected probability model.

4. Probability update: A selected context model is updated based on an actual coded value. For example, if a value of "bin" is 1, a frequency count of 1 increases.

To more clearly understand the loop filtering process in the foregoing encoding framework shown in FIG. 1, the loop filtering process is described in detail below by using FIG. 2.

FIG. 2 is a schematic flowchart of loop filtering according to an embodiment of this application. As shown in FIG. 2, the loop filter process may include a plurality of modules such as luma mapping with chroma scaling (LMCS), deblocking filter (DBF), bilateral filter (BIF), bilateral filter on chroma (BIF-Chroma), sample adaptive offset (SAO), cross-component sample adaptive offset (CCSAO), adaptive loop filtering (ALF), and cross-component adaptive loop filtering (CC-ALF). The bilateral filter, bilateral filter on chroma, sample adaptive offset, cross-component sample adaptive offset are operated in parallel, and offsets (correction values) generated thereof may be simultaneously added to a reconstructed pixel obtained through deblocking filter.

(1) Luma mapping with chroma scaling (LMCS): LMCS does not target a particular type of coding distortion, which improves coding efficiency by using a better sample value interval.

(2) Deblocking filter (DBF): The DBF is configured to reduce distortion caused by a coding process, and is further configured to alleviate discontinuity in boundaries between blocks caused by a block-based operation.

(3) Bilateral filter (BIF): The bilateral filter is a nonlinear filter method, is compromise processing combining spatial proximity and pixel value similarity of an image frame, and considers both spatial information and grayscale similarity of a reconstructed pixel that needs to be filtered, so as to achieve edge preserving between blocks and noise reduction. The reconstructed pixel in the embodiments of this application refers to a result generated by reconstructing a pixel in the to-be-encoded block at the coding stage, and the reconstructed pixels may include a luma reconstructed pixel (for example a Y component pixel) and chroma reconstructed pixels (for example, a U component pixel and a V component pixel). Y, U, and V herein refer to three color components in a YUV color space. Certainly, in the embodiments of this application, in addition to the YUV color space, another color space, for example, a YCbCr color space (where Y refers to a luma component, Cb refers to a blue chroma component, and Cr refers to a red chroma component), may further be used. A color space actually used is not limited in the embodiments of this application.

(4) Bilateral filter on chroma (BIF-Chroma): A main difference between the BIF-Chroma and the foregoing BIF is that the BIF is to perform bilateral filter processing on all three color components of the reconstructed pixel, and the BIF-Chroma is to perform bilateral filter processing only on the chroma reconstructed pixel (namely, a reconstructed value of the reconstructed pixel on a chroma component).

(5) Sample adaptive offset (SAO): The SAO is to adaptively offset an offset for each pixel sample to alleviate a difference from an original pixel in the to-be-encoded block due to a quantization operation. Specifically, a difference between the reconstructed pixel and the original pixel can be reduced by dividing inputted reconstructed pixels into different classes, generating a corresponding offset (offset) for each class, and adding the offset to the reconstructed pixel belonging to a corresponding class. In SAO classification, only a reconstructed value of a color component currently to-be-processed is used for classification. For example, when a reconstructed value of the reconstructed pixel on the chroma component (a chroma reconstructed pixel) is inputted, the SAO only classifies the inputted chroma reconstructed pixel.

(6) Cross-component sample adaptive offset (CCSAO): CCSAO, similar to SAO, can also reduce a difference between the reconstructed pixel and the original pixel by dividing inputted reconstructed pixels into different classes, generating a corresponding offset (offset) for each class, and adding the offset to the reconstructed pixel belonging to a corresponding class. The CCSAO can classify any to-be-processed color component by using reconstructed values of all three color components of the reconstructed pixel. For example, when the CCSAO inputs the chroma reconstructed pixel, all chroma reconstructed pixels and luma reconstructed pixels of the same pixel may be used for classification.

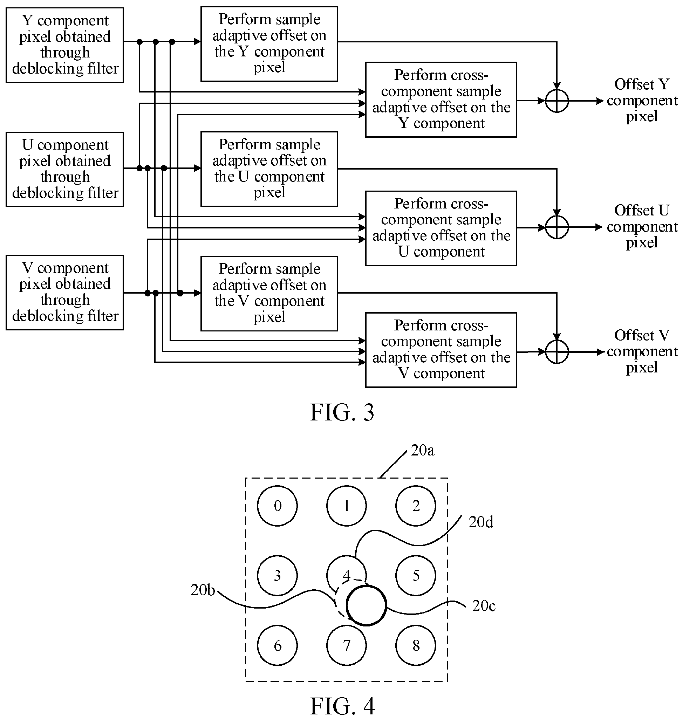

FIG. 3 is a basic schematic flowchart of cross-component sample adaptive offset according to an embodiment of this application. As shown in FIG. 3, the reconstructed pixel obtained through deblocking filter (DBF) may include pixel values on three color components. The three color components in the YUV color space are used as an example. The pixel values on the three color components may include a luma reconstructed pixel (a Y component pixel) and chroma reconstructed pixels (a U component pixel and a V component pixel).

After the Y component pixel obtained through the DBF is inputted into the SAO, sample adaptive offset may be performed on the Y component pixel obtained through the DBF, to obtain an offset 1 corresponding to the Y component pixel. In addition, the Y component pixel obtained through the DBF may be further inputted to the CCSAO, and cross-component sample adaptive offset is performed on the Y component pixel obtained through the DBF, to obtain an offset 2 corresponding to the Y component pixel. Further, the offset 1 outputted from the SAO and the offset 2 outputted from the CCSAO may be added to the Y component pixel obtained through the DBF, to obtain the offset Y component pixel.

For ease of understanding, in the embodiments of this application, only SAO and CCSAO are used as examples for description. In an actual application, offsets of the BIF and the BIF-Chroma may further be added to the offset Y component pixel. In other words, the Y component pixel obtained through the deblocking filter may be inputted into the BIF and the BIF-Chroma in sequence, to obtain their corresponding offsets. Similarly, the same operation may be performed on both the U component pixel and the V component pixel obtained through the DBF as the foregoing Y component pixel, to obtain the offset U component pixel and the offset V component pixel. Details are not described herein again.

It may be understood that, the CCSAO may include two types of offset, namely, band offset (BO) and edge offset (EO).

1. BO type in the CCSAO:

For the BO type, the CCSAO may directly perform classification based on the pixel value of the reconstructed pixel. Specifically, any luma reconstructed pixel or chroma reconstructed pixel may be classified by using reconstructed pixels {co-located Y pixel, co-located U pixel, co-located V pixel} of corresponding three color components. The co-located Y pixel, the co-located U pixel, and the co-located V pixel may be understood as reconstructed pixels on the three color components where the inputted reconstructed pixel is located. The foregoing three reconstructed pixels for classification are first divided into respective band classes {bandY, bandU, bandV}, and then a joint class index is generated based on the band classes of the three color components as a BO class of a reconstructed pixel currently inputted.

For each BO class, an offset may be generated, and then the offset is added to a reconstructed pixel previously inputted. A processing process of the CCSAO BO may be shown as Formula (1) below:

$$
\begin{aligned}
band_Y &= (Y_{col} \cdot N_Y) \gg BD \\
band_U &= (U_{col} \cdot N_U) \gg BD \\
band_V &= (V_{col} \cdot N_V) \gg BD \\
i &= band_Y \cdot (N_U \cdot N_V) + band_U \cdot N_V + band_V \\
C'_{rec} &= Clip1(C_{rec} + \sigma_{CCSAO}[i])
\end{aligned}
\tag{1}
$$

where

{$Y_{col}$, $U_{col}$, $V_{col}$} respectively represents co-located reconstructed pixels of three color components used for classification, $Y_{col}$ represents a co-located reconstructed pixel on a luma component, and $U_{col}$ and $V_{col}$ represent co-located reconstructed pixels on a chroma component. {$N_Y$, $N_U$, $N_V$} represents a total number of band classes when band division are performed on the three color components, BD represents a pixel value bit depth, and i represents a class index jointly generated by the three color components, and also refers to the BO class of the reconstructed pixel currently inputted. $C_{rec}$ and $C'_{rec}$ respectively represent reconstructed pixels obtained before and after the CCSAO. $\sigma_{CCSAO}[i]$ represents an offset corresponding to a band class i.

For the co-located reconstructed pixels of the three color components used for classification, the co-located chroma reconstructed pixels ($U_{col}$, $V_{col}$) are true co-located chroma reconstructed pixels (may also be referred to as co-located chroma components). The co-located luma reconstructed pixel ($Y_{col}$) may be selected from a 3*3 region centered on the true co-located luma reconstructed pixel as shown in FIG. 4.

FIG. 4 is a schematic diagram of a position of a band class classification sample in cross-component sample adaptive offset according to an embodiment of this application. As shown in FIG. 4, a region 20d represents a true co-located luma reconstructed pixel (namely, a true co-located Y pixel) at a position 4, a region 20a represents a target region of size 3 *3 centered on the true co-located luma reconstructed pixel, and both a region 20b and a region 20c represent co-located chroma reconstructed pixels at the position 4, where the region 20b represents a co-located U pixel and the region 20c represents a co-located V pixel.

For the CCSAO BO type, corresponding parameters, namely, a co-located luma reconstructed pixel position, a total number of band classes corresponding to the three color components, and the offset for each BO class, all need to be decided through a rate-distortion optimization (RDO) process and transmitted to a decoder side. For any possible co-located luma reconstructed pixel position in the region 20a shown in FIG. 4, the rate-distortion optimization may be performed to obtain a rate-distortion loss for each possible co-located luma reconstructed pixel position, and a co-located luma reconstructed pixel position with the smallest rate-distortion loss is used as a co-located luminance reconstructed pixel position that is finally transmitted to the decoder side.

2. EO type in the CCSAO:

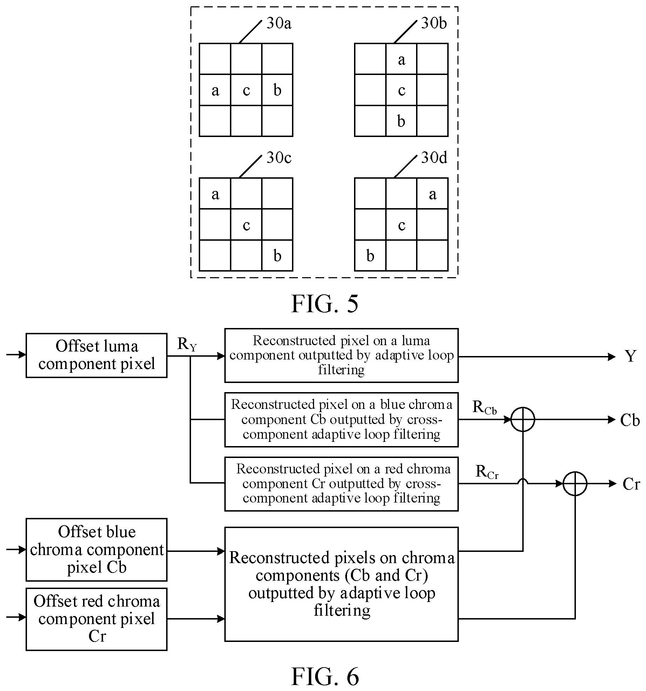

Similar to the sample adaptive offset (SAO), the CCSAO may also use an edge-based classification method. The existing CCSAO may support four different edge offset (EO) classification modes. FIG. 5 is a schematic diagram of a classification mode of an edge class in cross-component sample adaptive offset according to an embodiment of this application. As shown in FIG. 5, the four different edge offset (EO) classification modes in the CCSAO are respectively a horizontal classification mode as shown in a region 30a, a vertical classification mode as shown in a region 30b, a diagonal classification mode as shown in a region 30c, and an anti-diagonal classification mode as shown in a region 30d. In each EO classification mode, for any inputted luma reconstructed pixel or chroma reconstructed pixel, a difference between a corresponding co-located luma reconstructed pixel (a position c as shown in FIG. 5) and adjacent pixels (a position a and a position b as shown in FIG. 5) first needs to be calculated, and an EO type of the reconstructed pixel currently to-be-processed is obtained by comparing the difference with a predefined threshold (Th). It may be understood that, each classification mode respectively specifies a position relationship between the co-located luma reconstructed pixel and two adjacent pixels (a and b), and the two adjacent pixels are configured for calculating a difference with the co-located luma reconstructed pixel.

Different from the SAO, during CCSAO EO classification, for inputted reconstructed values of different inputted color components, only corresponding true co-located luma reconstructed pixels are used for classification. A processing process of the CCSAO EO may be shown as Formula (2) below:

$$Ea = (a - c < 0)? \ (a - c < (-Th)? \ 0:1): (a - c < (Th)? \ 2:3)$$

$$Eb = (b - c < 0)? \ (b - c < (-Th)? \ 0:1): (b - c < (Th)? \ 2:3) \qquad (2)$$

$$class_{idx} = i_B * 16 + Ea * 4 + Eb$$

$$C'_{rec} = Clip1(C_{rec} + \sigma_{CCSAO}[class_{idx}]), \text{ where}$$

"?:" is a conditional statement. For example, (Expression 1)? (Expression 2): (Expression 3) indicates that if Expression 1 is true, a value of an entire conditional expression is a value of Expression 2; or if Expression 1 is false, a value of an entire conditional expression is a value of Expression 3. Ea represents a difference (where for ease of understanding, the difference herein may be referred to as a first difference) between the position a (an adjacent pixel) and the position c (a co-located luma reconstructed pixel) shown in FIG. 5, and Eb represents a difference (where for ease of understanding, the difference herein may be referred to as a second difference) between the position b and the position c shown in FIG. 5. $i_B$ represents a band class used in the EO type, $class_{idx}$ refers to an EO class of the reconstructed pixel currently inputted, that is, the EO class of the CCSAO is generated by an edge-based class jointly with the band class, and $\sigma_{CCSAO}[class_{idx}]$ represents an offset corresponding to the edge type $class_{idx}$. A calculation process of $i_B$ may be shown as Formula (3) below:

$$i_B = (\text{cur} \cdot N_{cur}) \gg BD, \text{or}$$

$$i_B = (col1 \cdot N_{col1}) \gg BD, \text{or} \tag{3}$$

$$i_B = (col2 \cdot N_{col2}) \gg BD, \text{where}$$

"cur" represents a currently inputted color component reconstructed pixel to-be-processed, and "col1" and "col2" respectively represent co-located reconstructed pixels on other two color components. If the currently inputted color component reconstructed pixel to-be-processed is the luma reconstructed pixel, "col1" and "col2" are respectively reconstructed values of the co-located reconstructed pixels on the U component and the V component. If the currently inputted color component reconstructed pixel to-be-processed is the co-located reconstructed pixel on the U component, "col1", "col2" are respectively reconstructed values of the co-located reconstructed pixels on the Y component and the V component.

For the CCSAO EO type, an encoder side needs to select an optimal classification mode from the four classification modes shown in FIG. 5 through the rate-distortion optimization (RDO). An optimal threshold Th is selected from a predefined series of candidate thresholds and a corresponding index is transmitted to the decoder side. The encoder side also needs to select the reconstructed value from "cur", "col1", "col2" to generate a reconstructed pixel of the band class through the RDO and the reconstructed value is transmitted to the decoder side. In other words, for the four classification modes shown in FIG. 5, rate-distortion optimization may be performed on all to obtain rate-distortion losses respectively corresponding to classification modes, and a classification mode with the smallest rate-distortion loss is used as the optimal classification mode to be finally transmitted to the decoder side. For "cur", "col1", "col2" in Formula (3), rate-distortion optimization may also be performed, and a color component with the smallest rate-distortion loss is used as the reconstructed value of the reconstructed pixel for generating the band class, and is transmitted to the decoder side.

For video data that needs to be coded, different CCSAO classifiers may be used for different video content, and different classifiers may be used for different positions in an image. A type and a parameter of each classifier need to be explicitly transmitted to the decoder side at slice level. At a coding tree unit (CTU) level, there is a need to indicate whether a current CTU uses CCSAO. If the CCSAO is used, a selection of a corresponding classifier needs to be further indicated, where up to four different groups of classifiers are supported per frame in the CCSAO. For a specific coding tree unit, if a rate-distortion loss without use of the CCSAO is less than a rate-distortion loss with use of the CCSAO, it may be determined that the CCSAO is not used for the coding tree unit; or if a rate-distortion loss without use of the CCSAO is greater than a rate-distortion loss with use of the CCSAO, it may be determined that the CCSAO is used for the coding tree unit, and a selection of the classifier is further performed.

(7) Adaptive loop filtering (ALF): The ALF is a Wiener filter that adaptively determines a filter coefficient based on a content of different video components, thereby reducing a mean square error (MSE) between a reconstructed color component and an original color component. The Wiener filter, as an adaptive filter, may generate different filter coefficients for different characteristics of video content, so that the ALF first needs to classify the video content and use a corresponding filter for video content of each class. An input of the ALF is a reconstructed pixel value filtered by the DBF, the BIF, the BIF-Chroma, the SAO, and the CCSAO, and an output of the ALF is an enhanced reconstructed luma image and a reconstructed chroma image. The ALF for the luma reconstructed pixel may support 25 different classes of filters, and the ALF for each chroma reconstructed pixel may support up to eight different classes of filters.

For the luma reconstructed pixel, the ALF adaptively uses different filters at a sub-block level (for example, the sub-block level may be a 4*4 luma block), that is, each 4*4 pixel block needs to be divided into one of 25 classes. A classification index C of a luma pixel block is defined by a directionality feature D (Directionality) and a quantized activity feature $\hat{A}$ (Activity) of the pixel block. The classification index C may be shown as Formula (4) below:

$$C = 5D + \hat{A} \tag{4}$$

To calculate the directionality feature D and the quantified activity feature $\hat{A}$, firstly, horizontal, vertical, diagonal, and anti-diagonal gradient values for each pixel within a 4*4 pixel block may be calculated, which are specifically shown as Formula (5) to Formula (8) below:

$$H_{k,l} = |2R(k,l) - R(k-1,l) - R(k+1,l)| \tag{5}$$

$$V_{k,l} = |2R(k,l) - R(k,l-1) - R(k,l+1)| \tag{6}$$

$$DO_{k,l} = |2R(k,l) - R(k-1,l-1) - R(k+1,l+1)| \qquad (7)$$

$$D1_{k,l} = |2R(k,l) - R(k-1,l+1) - R(k+1,l-1)| \qquad (8),$$

where

$H_{k,l}$ in Formula (5) represents a horizontal pixel gradient value at a (k, l) position, $V_{k,l}$ in Formula (6) represents a vertical pixel gradient value at the (k, l) position, $DO_{k,l}$ in Formula (7) represents a diagonal pixel gradient value at the (k, l) position, and $D1_{k,l}$ in Formula (8) represents an anti-diagonal pixel gradient value at the (k, l) position. R(k, l) represents a reconstructed pixel value at a (k, l) position before ALF filtering.

Based on the pixel gradient values shown in Formula (5) to Formula (8), the calculation of an overall horizontal, vertical, diagonal, and anti-diagonal gradient for each 4*4 pixel block is shown as Formula (9) and Formula (10) below:

$$g_h = \sum_{k=i-2}^{i+5} \sum_{l=j-2}^{j+5} H_{k,l}, g_v = \sum_{k=i-2}^{i+5} \sum_{l=j-2}^{j+5} V_{k,l} \qquad (9)$$

$$g_{d0} = \sum_{k=i-2}^{i+5} \sum_{l=j-2}^{j+5} DO_{k,l}, g_{d1} = \sum_{k=i-2}^{i+5} \sum_{l=j-2}^{j+5} D1_{k,l} \qquad (10),$$

where

i and j represent coordinates of an upper left pixel in a 4*4 pixel block, $g_h$ represents an overall horizontal pixel gradient value corresponding to the 4*4 pixel block, $g_v$ represents an overall vertical pixel gradient value corresponding to the 4*4 pixel block, $g_{d0}$ represents an overall diagonal pixel gradient value corresponding to the 4*4 pixel block, and $g_{d1}$ represents an overall anti-diagonal pixel gradient value corresponding to the 4*4 pixel block.

Further, after the pixel gradient value of the pixel block is obtained, a maximum value of the horizontal pixel gradient value and the vertical pixel gradient value for each pixel block may be denoted as $g_{h,v}^{max} = max(g_h, g_v)$, and a minimum value may be denoted as $g_{h,v}^{min} = min(g_h, g_v)$. A maximum value of the diagonal pixel gradient value and the anti-diagonal pixel gradient value for each pixel block may be denoted as $g_{d0,d1}^{max} = max(g_{d0}, g_{d1})$, and a minimum value may be denoted as $g_{d0,d1}^{min} = min(g_{d0}, g_{d1})$.

The directionality feature D may be derived from the maximum value $g_{h,v}^{max}$ and the minimum value $g_{h,v}^{min}$ of the horizontal pixel gradient value and the vertical pixel gradient value, and the maximum value $g_{d0,d1}^{max}$ and the minimum value $g_{d0,d1}^{min}$ of the diagonal pixel gradient value and the anti-diagonal pixel gradient value described above. Derivation operations may be as follows:

Operation 1: If both $g_{h,v}^{max} \leq t_1 \cdot g_{h,v}^{min}$ and $g_{d0,d1}^{max} \leq t_1 \cdot g_{d0,d1}^{min}$ are true, the directionality feature D is set to 0, where $t_1$ may be represented as a preset parameter.

Operation 2: If $g_{h,v}^{max}/g_{h,v}^{min} > g_{d0,d1}^{max}/g_{d0,d1}^{min}$, operation 3 is performed; otherwise, operation 4 is performed.

Operation 3: If $g_{h,v}^{max} > t_2 \cdot g_{h,v}^{min}$, the directionality feature D is set to 2; otherwise, the directionality feature D is set to 1.

Operation 4: If $g_{d0,d1}^{max} > t_2 \cdot g_{d0,d1}^{min}$, the directionality feature D is set to 4; otherwise, the directionality feature D is set to 3.

$t_1$ and $t_2$ are parameters preset based on an actual requirement, and are not limited in this application.

The quantified activity feature $\hat{A}$ may be denoted as an activity feature A before quantification, and the activity feature A is calculated through Formula (11) as follows:

$$A = \sum_{k=i-2}^{i+5} \sum_{l=j-2}^{j+5} (V_{k,l} + H_{k,l}) \qquad (11),$$

where

the activity feature A may be quantized to an interval of [0-4] to obtain the quantized activity feature $\hat{A}$.

Before each 4*4 luma block (including a block formed by luma reconstructed pixels of pixels in the foregoing pixel block) is filtered, according to rules of Table 1, geometric transformation may be performed on the filter coefficient and a corresponding clipping value based on a pixel gradient value of a current luma block. The geometric transformation may include, but is not limited to: no transformation, diagonal, vertical flip, and rotation. Table 1 may be expressed as follows:

Table 1

| Gradient value | Geometric transformation |
|---|---|
| $g_{d1} < g_{d0}$ and $g_h < g_v$ | No transformation |
| $g_{d1} < g_{d0}$ and $g_v \leq g_h$ | Diagonal |
| $g_{d0} \leq g_{d1}$ and $g_h < g_v$ | Vertical flip |
| $g_{d0} \leq g_{d1}$ and $g_v \leq g_h$ | Rotation |

Performing geometric transformation on the filter coefficient is equivalent to performing geometric transformation on the pixel value and then performing filtering without changing the coefficient. An objective of the geometric transformation is to align the directionality of the content of different pixel blocks as much as possible, thereby reducing a number of classifications required for the ALF, so that different pixels share the same filter coefficient. The introduction of geometric transformation can improve a true classification from 25 classes to 100 classes without increasing a number of ALF filters, improving adaptivity.

(8) Cross-component adaptive loop filtering (CC- ALF): The CC-ALF is similar to the foregoing ALF and is also a Wiener filter. A function of the CC-ALF is also similar to that of the ALF. Details are not described herein again. The CC-ALF only acts on the chroma reconstructed pixel. An input of the CC-ALF is the luma reconstructed pixel obtained before the ALF and after filtering by the DBF, the BIF, the BIF-Chroma, the SAO and the CCSAO, and an output is a correction value of a corresponding chroma reconstructed pixel. The CC-ALF also needs to first classify the video content and use the corresponding filter for the video content of each class. The CC-ALF for each chroma reconstructed pixel may support up to four different classes of filters. The CC-ALF can utilize the correlation between luma reconstructed pixel and the chroma reconstructed pixel to obtain a correction value of the chroma reconstructed pixel by performing linear filtering on the luma reconstructed pixel. The correction value is added to the chroma reconstructed pixel obtained through the ALF to form a final reconstructed chroma pixel.

The CC-ALF generates a corresponding correction value for each chroma reconstructed pixel by performing linear filtering on the luma reconstructed pixel. An implementation procedure of the CC-ALF and a relationship between the CC-ALF and the ALF may be shown in FIG. 6. FIG. 6 is a schematic diagram of a framework of cross-component adaptive loop filtering according to an embodiment of this application. The YCbCr color space is used as an example for description in the embodiments of this application. As shown in FIG. 6, offsets are generated through the BIF, the BIF-Chroma, the SAO, and the CCSAO, and the offsets generated are simultaneously added to the reconstructed pixel obtained through deblocking filter. Therefore, the offset luma component pixel (for example, a Y component pixel $R_Y$), the offset blue chroma component pixel Cb, and the offset red chroma component pixel Cr may be obtained.

The offset luma component pixel $R_Y$ may be inputted to the ALF on the luma component, and a final luma component pixel Y is outputted through the ALF. The offset luma component pixel $R_Y$ is inputted to the CC-ALF on the blue chroma component, the reconstructed pixel on the blue chroma component Cb is outputted through CC-ALF processing, and a difference $\Delta R_{Cb}$ between a pixel value of the blue chroma component outputted by the CC-ALF and a pixel value of the blue chroma component obtained through deblocking filter is calculated. The offset luma component pixel $R_Y$ is inputted to the CC-ALF on the red chroma component, the reconstructed pixel on the red chroma component Cr is outputted through CC-ALF processing, and a difference $\Delta R_{Cr}$ between a pixel value of the red chroma component outputted by the CC-ALF and a pixel value of the red chroma obtained through deblocking filter is calculated.

The offset blue chroma component pixel and the offset red chroma component pixel may be inputted to the ALF on the chroma component, the reconstructed pixel on the blue chroma component may be outputted through the ALF, and added to $\Delta R_{Cb}$ to obtain the final blue chroma component pixel Cb. The reconstructed pixel on the red chroma component may be outputted through the ALF, and added to $\Delta R_{Cr}$ to obtain the final red chroma component pixel Cr.

A filtering process of the CC-ALF may be shown as Formula (12) below:

$$\Delta R_f(x, y) = \sum_{(x_0, y_0) \in S_f} R_Y(x_C + x_0, y_C + y_0) c_f(x_0, y_0) \tag{12},$$

where

$R_Y$ is a reconstructed sample that is obtained through processing of the BIF, the BIF-Chroma, the SAO, and the CCSAO and by adding the corresponding offsets simultaneously to the reconstructed pixel obtained through deblocking filter, $(x, y)$ is a sample position of the chroma component pixel f (where the chroma component pixel herein may be the reconstructed chroma component pixel and may be referred to as the chroma reconstructed pixel), $(x_c, y_c)$ is a luma component pixel obtained from the chroma component pixel f (the luma component pixel herein may also be referred to as the luma reconstructed pixel), $S_f$ is a filtered region supported by the CC-ALF filter on a luma component, and $c_f(x_0, y_0)$ is a filter coefficient corresponding to the chroma component pixel f. $(x_0, y_0)$ is an offset position corresponding to the luma component pixel. A position corresponding to the luma component pixel f is obtained by transforming coordinates of the chroma component pixel based on a scaling relationship between luma and chroma corresponding to the video data. $\Delta R_f(x, y)$ represents a correction value of the chroma component pixel f at the $(x, y)$ position obtained through CC-ALF processing.

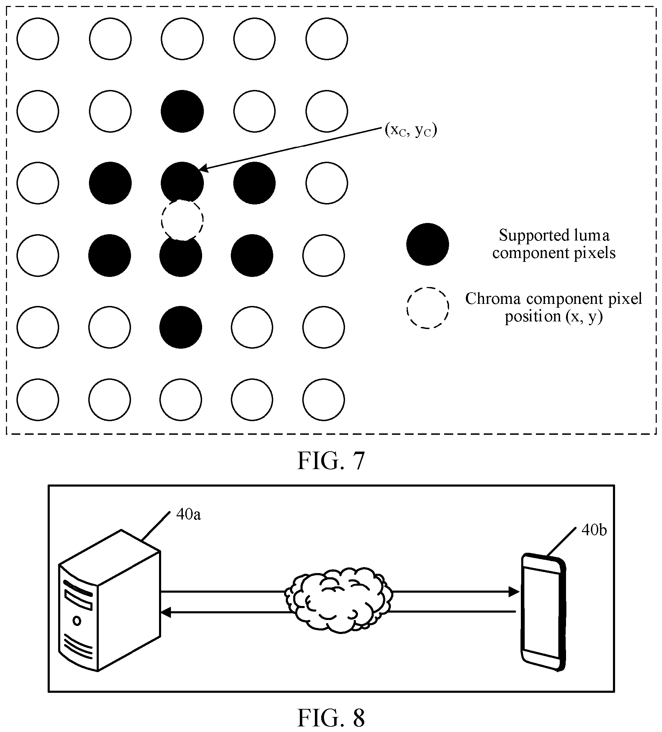

FIG. 7 is a schematic diagram of a shape of a filter of cross-component adaptive loop filtering according to an embodiment of this application. The CC-ALF may support a 3*4 diamond filter as shown in FIG. 7, a black circle as shown in FIG. 7 may be represented as a luma component pixel supported by the CC-ALF filter, and a white dashed circle may be represented as a sample position $(x, y)$ of the chroma component pixel f.

Compared with the ALF, the filter coefficient of the CC-ALF removes the restriction of symmetry, allowing the filter to flexibly adapt to a relative relationship between various luma components and chroma components. In addition, to reduce a number of filter coefficients that need to be transmitted, in design of a current existing encoding framework, the CC-ALF has the following two constraints on the filter coefficient of the CC-ALF:

1. A sum of all coefficients of the CC-ALF is limited to 0. Therefore, for the 3*4 diamond filter, only seven filter coefficients need to be calculated and transmitted, and a filter coefficient at a center position may be automatically deduced at the decoder side based on this condition. 2. An absolute value of each filter coefficient that needs to be transmitted needs to be a power of 2, and may be represented by up to 6 bits. Therefore, the absolute value of the filter coefficient of the CC-ALF is {0, 2, 4, 8, 16, 32, 64}. In this design, a shift operation may be used to replace a multiplication operation to reduce a number of multiplication operations. Different from luma ALF, which supports sub-block level classification and adaptive selection, the CC-ALF only supports CTU level classification and adaptive selection. For each chroma component pixel, all chroma component pixels in a CTU belong to the same class, and the CTU may use the same filter.

An adaptation parameter set (APS) may include up to 25 sets of luma ALF filter coefficients and corresponding clipping value indexes. Each chroma component pixel supports up to eight sets of chroma ALF filter coefficients and corresponding clipping value indexes, and each chroma component pixel supports up to four sets of CC-ALF filter coefficients. To save code rate, for the luma ALF filter, the filter coefficients of different classes may be merged (Merge), and a plurality of classes share a set of filter coefficients. The encoder side decides which classes of coefficients may be merged through the rate-distortion optimization (RDO). An index of the APS used by a current slice is marked in the slice header. The CC-ALF supports CTU level adaptation, and for a case of a plurality of filters, whether the CC-ALF is used and the index of the filter used are adaptively chosen for each chroma component pixel at the CTU level.

FIG. 8 is a schematic structural diagram of a data processing system according to an embodiment of this application. As shown in FIG. 8, the data processing system may include an encoding device 40a (an encoder side) and a decoding device 40b (a decoder side). The encoding device 40a may be a terminal device or a server, and the decoding device 40b may be a terminal device or a server. A direct communication connection may be established between the encoding device 40a and the decoding device 40b through wired communication, or an indirect communication connection may be established through wireless communication.

The electronic device may include, but is not limited to: a smart phone, a tablet computer, a notebook computer, a palmtop computer, a mobile Internet device (MID), a wearable device (for example, a smartwatch and a smart band), a smart speech interaction device, a smart household appliance (for example, a smart television), an in-vehicle device, an VR device (for example, an VR helmet and VR glasses), and the like. The server may be an independent physical server, or may be a server cluster including a plurality of physical servers or a distributed system, or may be a cloud server providing basic cloud computing services, such as a cloud service, a cloud database, cloud computing, a cloud function, cloud storage, a network service, cloud communication, a middleware service, a domain name service, a security service, a content delivery network (CDN), big data, and an artificial intelligence platform.

(1) For the encoding device 40a:

The encoding device 40a may acquire video data, where the video data may be acquired in a manner of scene capture. That a scene captures the video data is that a real world visual scene is collected through a capture device associated with the encoding device 40a to obtain the video data. The capture device may be configured to provide a video data acquisition service for the encoding device 40a. The capture device may include, but is not limited to, any one of the following: a photographing device, a sensing device, and a scanning device.

The photographing device may include an ordinary camera, a stereo camera, a light field camera, and the like. The sensing device may include a laser device, a radar device, and the like. The scanning device may include a three-dimensional laser scanning device, and the like. The capture device associated with the encoding device 40a may be a hardware component disposed in the encoding device 40a, for example, the capture device is a camera, a sensor, or the like of a terminal device, and the capture device associated with the encoding device 40a may alternatively be a hardware apparatus connected to the encoding device 40a, such as a camera connected to a server.

The encoding device 40a may perform encoding processing on an image frame in the video data, to obtain an encoded bitstream corresponding to the video data. This to-be-encoded block embodiment of this application is mainly aimed at the EO type of the CCSAO in loop filtering. During the CCSAO EO classification, the encoding device 40a may perform CCSAO EO classification based on the extended co-located luma reconstructed pixel of the to-be-processed reconstructed pixel (which may also be referred to as a generalized co-located luma reconstructed pixel, that is, a specific luma reconstructed pixel in the target region centered on the true co-located luma reconstructed pixel). In addition, the encoding device 40a may perform CCSAO EO classification by using other available classification modes than horizontal, vertical, diagonal, anti-diagonal classification modes, and calculate the offset for each EO class. The encoded bitstream is obtained by coding a difference between the original pixel in the to-be-encoded block and the reconstructed pixel with the offset added. Further, the encoding device 40a may transmit the obtained encoded bitstream to the decoding device 40b.

(2) For the decoding device 40b:

After receiving a compressed bitstream (an encoded bitstream) transmitted by the encoding device 40a, the decoding device 40b may perform decoding processing on the encoded bitstream to reconstruct an image frame pixel in the video data. In particular, the decoding device 40b may determine a currently used classification mode by parsing a syntactic element associated with the classification mode in the encoded bitstream, and then determine the extended co-located luma reconstructed pixel position and the target classification mode (namely, a classification mode actually used) for the CCSAO EO classification based on a mode definition set together by the encoding device 40a and the decoding device 40b. Alternatively, the decoding device 40b may determine the extended co-located luma reconstructed pixel position by parsing a syntactic element associated with the extended co-located luma reconstructed pixel position in the encoded bitstream, and then may determine a selected target classification mode by parsing the syntactic element associated with the classification mode in the encoded bitstream. Further, the decoding device 40b may reconstruct the image frame pixel in the video data through the extended co-located luma reconstructed pixel position and a true classification pattern.

In the embodiments of this application, the encoding device may perform CCSAO EO classification based on the extended co-located luma reconstructed pixel of the color component pixel. In addition, the encoding device may also perform CCSAO EO classification by using the extended classification mode (including other available classification modes than the foregoing four classification modes of horizontal, vertical, diagonal, and anti-diagonal), which can improve class accuracy of the CCSAO EO of pixels, and can further improve the coding performance for the video data. The decoding device may parse the image frame pixel in the video data to obtain the extended co-located luma reconstructed pixel position and the true classification mode, which can improve the decoding performance for the video data. It may be understood that, the data processing system described in the embodiments of this application is intended to more clearly describe the technical solutions in the embodiments of this application, and do not constitute a limitation on the technical solutions in the embodiments of this application. A person of ordinary skill in the art may learn that, with evolution of the system and appearance of a new service scenario, the technical solutions provided in the embodiments of this application also apply to a similar technical problem.

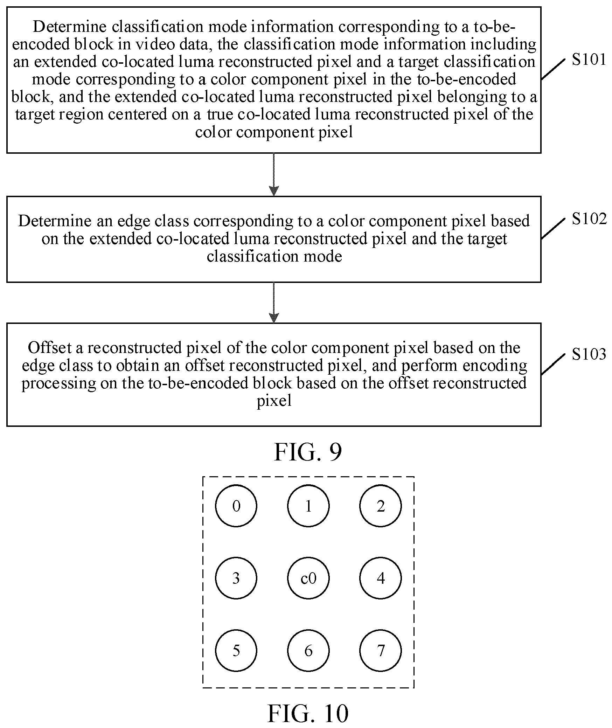

FIG. 9 is a schematic flowchart of a data processing method according to an embodiment of this application. It may be understood that, the data processing method may be performed by a computer device, and the computer device may be the encoding device 40a shown in FIG. 8, so that the data processing method corresponds to an encoding method. As shown in FIG. 9, the data processing method may include the following operation S101 to operation S103:

Operation S101: Determine classification mode information corresponding to a to-be-encoded block in video data, the classification mode information including an extended co-located luma reconstructed pixel and a target classification mode corresponding to a color component pixel in the to-be-encoded block, and the extended co-located luma reconstructed pixel belonging to a target region centered on a true co-located luma reconstructed pixel of the color component pixel.

Specifically, when the computer device performs encoding processing on video data, framing processing may be performed on the video data to obtain a video sequence corresponding to the video data. The video sequence includes image frames in the video data, and the image frames in the video sequence are arranged according to a time sequence of the image frames in the video data. For a to-be-encoded image frame in the video data, the to-be-encoded image frame may be divided into a plurality of blocks (which may be coding tree blocks or coding tree units), and a block currently to-be-processed in the to-be-encoded image frame may be referred to as a to-be-encoded block.

It may be understood that, a video coding process is performed in units of blocks. Therefore, when a to-be-encoded block is coded, coding operations such as transform, quantization, prediction, loop filtering, and entropy coding may be performed on the to-be-encoded block. For a specific implementation procedure, reference may be made to the description shown in FIG. 1 to FIG. 7. The technical solutions provided in the embodiments of this application is mainly aimed at the CCSAO EO classification processing process in the loop filtering. Different from an existing video encoding framework, which only uses a fixed true co-located luma reconstructed pixel and the foregoing four classification modes (which may also be referred to as basic classification modes) shown in FIG. 5 for CCSAO EO classification, the embodiments of this application propose to use extended co-located luma reconstructed pixel (which may be selected from the target region centered on the true co-located luma reconstructed pixel, or may also be referred to as a generalized co-located luma reconstructed pixel) for CCSAO EO classification, or to use extended classification mode (other available classification modes than the four classification modes shown in FIG. 5) for CCSAO EO classification, or to simultaneously use the extended co-located luma reconstructed pixel and the extended classification mode for CCSAO EO classification. The CCSAO EO classification processing process is described in detail below by using any color component pixel in the to-be-encoded block as an example.

In the embodiments of this application, for each original color component pixel in the to-be-encoded block, the foregoing loop filtering procedure shown in FIG. 2 may be performed, that is, the color component pixel inputted to the CCSAO is essentially the reconstructed pixel of the original color component pixels in the to-be-encoded block obtained through deblocking filter. For the color component pixel inputted to the CCSAO, the computer device may acquire the true co-located luma reconstructed pixel corresponding to the color component pixel, determine the target region with a target size by using the true co-located luma reconstructed pixel as a region center, and determine the extended co-located luma reconstructed pixel corresponding to the color component pixel in the target region. That is, the extended co-located luma reconstructed pixel may be any luma reconstructed pixel in the target region. The computer device may acquire a candidate classification mode set corresponding to the color component pixel, determine a target classification mode corresponding to the color component pixel in the candidate classification mode set, and add the extended co-located luma reconstructed pixel and the target classification mode to the classification mode information corresponding to the to-be-encoded block.

The target size may be configured for representing the coverage range of the target region, for example, the target region may be 3*3, and the target region may be considered as a selected region of the extended co-located luma reconstructed pixel. The extended co-located luma reconstructed pixel corresponding to the color component pixel is the optimal luma reconstructed pixel selected from the target region. FIG. 10 is a schematic diagram of a selection region of an extended co-located luma reconstructed pixel according to an embodiment of this application. As shown in FIG. 10, a position c0 may be represented as a true co-located luma reconstructed pixel corresponding to the color component pixel, and the position c0 is a center of a target region. The target region may include a position 0 to a position 7, and the position c0 in which the true co-located luma reconstructed pixel is located. The extended co-located luma reconstructed pixel corresponding to the color component pixel may be an optimal luma reconstructed pixel selected from the position 0 to the position 7, or may be an optimal luma reconstructed pixel selected from the position 0 to the position 7 and the position c0.

The target classification mode may be an optimal classification mode selected from a candidate classification mode set. The candidate classification mode set may refer to a set of all possible classification modes for calculating a difference with surrounding adjacent pixels for each possible position of the extended co-located luma reconstructed pixel in the target region. When the extended co-located luma reconstructed pixel is used for CCSAO EO classification, coverage regions of different classification modes in the candidate classification mode set may not be limited. For example, a size of the coverage regions of different classification modes may be 5*5. In this case, when the extended co-located luma reconstructed pixel is any luma reconstructed pixel in the target region, the candidate classification mode set includes a basic classification mode and an extended classification mode, or the candidate classification mode set includes an extended classification mode.

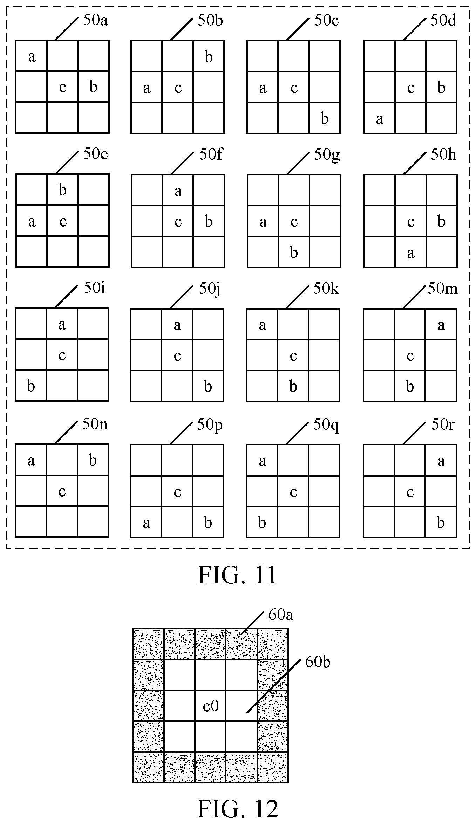

Specifically, if the extended co-located luma reconstructed pixel is any luma reconstructed pixel in the target region other than the true co-located luma reconstructed pixel, that is, the luma reconstructed pixel at any position from the position 1 to the position 7 as shown in FIG. 10, in this case, the candidate classification mode may include only the basic classification mode, or include only the extended classification mode, or include both the basic classification mode and the extended classification mode. If the extended co-located luma reconstructed pixel is the true co-located luma reconstructed pixel in the target region, at the position c0 as shown in FIG. 10, in this case, the candidate classification mode may include only the extended classification mode. The basic classification mode may include a horizontal classification mode, a vertical classification mode, a diagonal classification mode, and an anti-diagonal classification mode. As the foregoing classification model shown in FIG. 5, the extended classification mode is an available classification mode, for example, the extended classification mode shown in FIG. 11, other than the basic classification mode.

FIG. 11 is a schematic diagram of an extended classification mode according to an embodiment of this application. The extended classification mode provided in this application may include 16 classification modes shown as an extended classification mode 50a to an extended classification mode 50r in FIG. 11. The target classification mode corresponding to the color component pixel may be any extended classification modes shown in FIG. 11, that is, the target classification mode corresponding to the color component pixel may be selected from all the extended classification modes shown in FIG. 11.

When the extended classification mode is used for CCSAO EO classification, classification may be used only for the chroma component pixel, or may be used for all color component pixels (the chroma component pixel and the luma component pixel), or may be used only for the luma component pixel. This is not limited in this application.

The color component pixel in the to-be-encoded block may be the luma component pixel, or may be the color component pixel. For example, when the extended co-located luma reconstructed pixel is used for CCSAO EO classification, classification may be used only for the chroma component pixel, or may be used for all color component pixels (the chroma component pixel and the luma component pixel), or may be used only for the luma component pixel. This is not limited in this application.

It may be understood that, the CCSAO EO classification is performed by calculating its corresponding co-located luma reconstructed pixel regardless of whether the currently inputted color component pixel to-be-processed is the luma component pixel or the chroma component pixel. When the co-located luma reconstructed pixel corresponding to the color component pixel is calculated, especially when the co-located luma reconstructed pixel corresponding to the chroma component pixel is calculated, there may be a specific difference between an actual position of the co-located luma reconstructed pixel obtained through calculation and an actual position of the color component pixel. Therefore, the CCSAO EO classification accuracy of the color component pixel may be improved by using the extended co-located luma reconstructed pixel for CCSAO EO classification. In an actual application scenario, based on the consideration in terms of code rate, it is also possible to choose to use the extended co-located luma reconstructed pixel for CCSAO EO classification only for the chroma component pixel, which is supported by the technical solutions provided in the embodiments of this application.

In one or more embodiments, when the extended co-located luma reconstructed pixel is used for CCSAO EO classification, if the coverage region of different classification modes cannot exceed the range covered by different classification modes in the current existing CCSAO EO classification, that is, the coverage region of different classification modes cannot exceed the target region centered on the true co-located luma reconstructed pixel. In this way, the coverage region of different classification modes may be seen in FIG. 12. FIG. 12 is a schematic diagram of a mode coverage range of an extended co-located luma reconstructed pixel according to an embodiment of this application. As shown in FIG. 12, the position c0 represents the true co-located luma reconstructed pixel corresponding to the color component pixel, a region 60a represents an unavailable region of the extended co-located luma reconstructed pixel, and a region 60b is a coverage region specified by each classification mode. In other words, positions of two adjacent elements of the extended co-located luma reconstructed pixel specified by each classification mode in the candidate classification mode set need to be in the region 60b and not beyond a range of the region 60b, that is, a region beyond the range of the region 60b is the unavailable region.

In some embodiments, when the coverage region specified by each classification mode is the target region, the luma reconstructed pixels other than those at vertex positions in the target region may be determined as a candidate luma pixel set corresponding to the color component pixel. In this case, the candidate luma pixel set may include the luma reconstructed pixel in a cross-shaped region of the target region, such as a position 1, a position 3, a position 4, a position 6, and a position c0 as shown in FIG. 10. Rate-distortion optimization processing is separately performed on the color component pixel based on each luma reconstructed pixel in the candidate luma pixel set to obtain a first rate-distortion loss corresponding to each luma reconstructed pixel in the candidate luma pixel set. A luma reconstructed pixel (an optimal luma reconstructed pixel) corresponding to a smallest first rate-distortion loss is determined as the extended co-located luma reconstructed pixel corresponding to the color component pixel.

In addition, on the premise that the coverage region specified by each classification mode is the target region, the available classification mode may be limited based on the extended co-located luma reconstructed pixel position. For example, the candidate classification mode set corresponding to the color component pixel may be determined based on the extended co-located luma reconstructed pixel position in the target region. In this case, the coverage range of the classification mode in the candidate classification mode set is less than or equal to the target region. When the extended co-located luma reconstructed pixel is at any one of the position 1, the position 3, the position 4, the position 6 as shown in FIG. 10, the candidate classification mode set corresponding to each possible position of the extended co-located luma reconstructed pixel may include the horizontal classification mode or the vertical classification mode. When the extended co-located luma reconstructed pixel is at the position c0 (namely, the true co-located luma reconstructed pixel) as shown in FIG. 10, the candidate classification mode set may include the horizontal classification mode, the vertical classification mode, the diagonal classification mode, and the anti-diagonal classification mode, that is, the four classification modes shown in FIG. 5. Rate-distortion optimization processing is separately performed on the color component pixel based on each classification mode in the candidate classification mode set to obtain a second rate-distortion loss corresponding to each classification mode in the candidate classification mode set. A classification mode (an optimal classification mode) corresponding to a smallest second rate-distortion loss is determined as the target classification mode corresponding to the color component pixel.

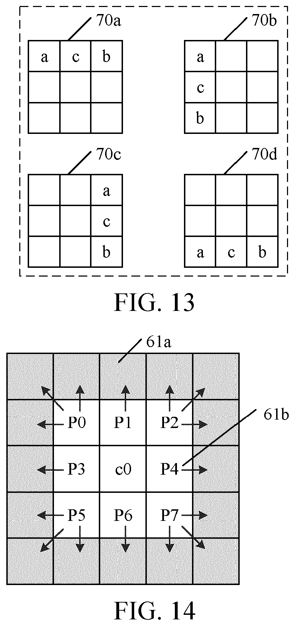

FIG. 13 is a schematic diagram of a position of an extended co-located luma reconstructed pixel and a corresponding classification mode according to an embodiment of this application. As shown in FIG. 13, when the extended co-located luma reconstructed pixel is at the position 1 shown in FIG. 10, the classification mode corresponding to the extended co-located luma reconstructed pixel is the horizontal classification mode 70a shown in FIG. 13. When the extended co-located luma reconstructed pixel is at the position 3 shown in FIG. 10, the classification mode corresponding to the extended co-located luma reconstructed pixel is the vertical classification mode 70b shown in FIG. 13. When the extended co-located luma reconstructed pixel is at the position 4 shown in FIG. 10, the classification mode corresponding to the extended co-located luma reconstructed pixel is the vertical classification mode 70c shown in FIG. 13. When the extended co-located luma reconstructed pixel is at the position 6 shown in FIG. 10, the classification mode corresponding to the extended co-located luma reconstructed pixel is the horizontal classification mode 70d shown in FIG. 13.

In some embodiments, on the premise that the coverage region specified by each classification mode is the target region, if the extended co-located luma reconstructed pixel is any luma reconstructed pixel in the target region, and the coverage range of different classification modes in the candidate classification mode set is larger than the target region, an edge pixel in the target region is filled into an adjacent region of the target region to obtain a mode coverage range, the mode coverage range being configured for determining the target classification mode from the candidate classification mode set. In other words, when the coverage region of different classification modes exceeds the coverage range of different classification modes of the existing CCSAO EO classification, that is, when the coverage region of the classification mode exceeds the target region, the unavailable region of the extended co-located luma reconstructed pixel may be filled by using the range covered by the different classification modes of the existing CCSAO EO classification, that is, the unavailable region of the extended co-located luma reconstructed pixel may be filled by duplicating the edge pixel in the target region.

FIG. 14 is a schematic diagram of using a coverage range to fill an unavailable region of an extended co-located luma reconstructed pixel according to an embodiment of this application. As shown in FIG. 14, a region 61b represents a range covered by different classification modes of the existing CCSAO EO classification, or may refer to the available region (for example, the target region) of the extended co-located luma reconstructed pixel, and a region 61a represents the unavailable region of the extended co-located luma reconstructed pixel. When the coverage range of the classification mode in the candidate classification mode set is larger than the region 61b (the target region), each edge pixel in the region 61b may be filled into a region adjacent to a corresponding edge pixel in the region 61a. For example, an edge pixel P0 in the region 61b may be filled into a region adjacent to the edge pixel P0 in the region 61a, and an edge pixel P1 in the region 61b may be filled into a region adjacent to the edge pixel P1 in the region 61a.

The candidate luma pixel set corresponding to the color component pixel may include all or some of the luma reconstructed pixels in the target region. For example, based on a restricted condition in the actual application scenario, the luma reconstructed pixel at any position in the target region may be selected as the candidate luma pixel set corresponding to the color component pixel. This is not limited in this application.

Operation S102: Determine an edge class corresponding to a color component pixel based on an extended co-located luma reconstructed pixel and a target classification mode.

Specifically, after the extended co-located luma reconstructed pixel and the target classification mode corresponding to the color component pixel are determined, for ease of understanding, the extended co-located luma reconstructed pixel may be denoted c, and the true co-located luma reconstructed pixel may be denoted c0. Because the edge class may be jointly generated based on the edge class and the band class, the extended co-located luma reconstructed pixel herein may be configured for calculating only the edge class of the color component pixel, or may be configured for calculating only the band class of the color component pixel, or may be used for calculating both the band class and the edge class of the color component pixel.

An example is used below in which the color component pixel is the luma component pixel. When the extended co-located luma reconstructed pixel is configured for calculating the band class (which may be denoted as $i_B$) and the edge class (which may be denoted as $class_{idx}$) of the color component pixel, the computer device may determine a first adjacent pixel (which may be denoted as a) and a second adjacent pixel (which may be denoted as b) corresponding to the extended co-located luma reconstructed pixel c based on the target classification mode; acquire a first difference (which may be denoted as Ea) between the first adjacent pixel and the extended co-located luma reconstructed pixel c, and acquire a second difference (which may be denoted as Eb) between the second adjacent pixel and the extended co-located luma reconstructed pixel; acquire a first co-located chroma pixel and a second co-located chroma pixel corresponding to the true co-located luma reconstructed pixel, that is, reconstructed pixels of the color component pixel on two chroma components; determine a band class $i_B$ to which the luma component pixel belongs based on the extended co-located luma reconstructed pixel, the first co-located chroma pixel, and the second co-located chroma pixel; and determine the edge class $class_{idx}$ corresponding to the color component pixel based on the band class $i_B$, the first difference, and the second difference.

A process of acquiring the band class $i_B$ to which the color component pixel belongs may include: a first product of the extended co-located luma reconstructed pixel (in this case, the extended co-located luma reconstructed pixel is equivalent to cur shown in Formula (3)) and a total number of band classes on a luma component (which may be denoted as $N_{cur}$) may be acquired, a second product of the first co-located chroma pixel (which may be denoted as col1) and a total number of band classes on a first chroma component (which may be denoted as $N_{col1}$) is acquired, and a third product of the second co-located chroma pixel (which may be denoted as col2) and a total number of band classes on a second chroma component (which may be denoted as $N_{col2}$) is acquired; and the band class $i_B$ to which the luma component pixel belongs is determined based on numerical relationships between a pixel value bit depth (which may be denoted as BD) and the first product, the second product, and the third product respectively. For example, in the YUV color space, the luma component is Y, the first chroma component may be U, and the second chroma component may be V. The color space used is not limited in this application. In other words, when the band class to which the color component pixel belongs is calculated, the extended co-located luma reconstructed pixel corresponding to the luma component pixel and the true co-located chroma component pixel are used; and when the edge class to which the color component pixel belongs is calculated, the extended co-located luma reconstructed pixel corresponding to the luma component pixel is used.

An example is used below in which the color component pixel is the luma component pixel. When the extended co-located luma reconstructed pixel is only configured for calculating the edge class $class_{idx}$ of the color component pixel, the computer device may determine a first adjacent pixel and a second adjacent pixel corresponding to the extended co-located luma reconstructed pixel based on the target classification mode; acquire a first difference between the first adjacent pixel and the extended co-located luma reconstructed pixel, and acquiring a second difference between the second adjacent pixel and the extended co-located luma reconstructed pixel; acquire a first co-located chroma pixel and a second co-located chroma pixel corresponding to the true co-located luma reconstructed pixel; determine a band class to which the luma component pixel belongs based on the true co-located luma reconstructed pixel, the first co-located chroma pixel, and the second co-located chroma pixel; and determine the edge class corresponding to the color component pixel based on the band class, the first difference, and the second difference. In other words, when the band class to which the color component pixel belongs is calculated, the true co-located luma reconstructed pixel corresponding to the luma component pixel (namely, the luma reconstructed pixel itself obtained through deblocking filter) and the true co-located chroma component pixel are used; and when the edge class to which the color component pixel belongs is calculated, the extended co-located luma reconstructed pixel corresponding to the luma component pixel is used.

An example is used below in which the color component pixel is the luma component pixel. When the extended co-located luma reconstructed pixel is configured only for calculating the band class $i_B$ of the color component pixel, the computer device may determine a third adjacent pixel a and a fourth adjacent pixel b corresponding to the true co-located luma reconstructed pixel based on the target classification mode; acquire a third difference Ea between the third adjacent pixel and the true co-located luma reconstructed pixel, and acquire a fourth difference Eb between the fourth adjacent pixel and the true co-located luma reconstructed pixel; acquire a first co-located chroma pixel and a second co-located chroma pixel corresponding to the true co-located luma reconstructed pixel; determine a band class to which the luma component pixel belongs based on the extended co-located luma reconstructed pixel, the first co-located chroma pixel, and the second co-located chroma pixel; and determine the edge class corresponding to the color component pixel based on the band class, the third difference, and the fourth difference. In other words, when the band class to which the color component pixel belongs is calculated, the extended co-located luma reconstructed pixel corresponding to the luma component pixel and the true co-located chroma component pixel are used; and when the edge class to which the color component pixel belongs is calculated, the true co-located luma reconstructed pixel is used.

In some embodiments, the color component pixel may alternatively be the chroma component pixel (for example, the U component pixel and the V component pixel). When the edge class of the chroma component pixel is determined, the same operation as the foregoing luma component pixel may also be performed. For example, in the YUV color space, the color component pixel is the U component pixel. In this case, the U component pixel corresponds to a true co-located U component reconstructed pixel (which may be denoted as cur), the co-located luma component pixel (which may be denoted as col1) may be a true co-located luma reconstructed pixel or an extended co-located luma reconstructed pixel, and the co-located V component reconstructed pixel is a true co-located U component reconstructed pixel. An implementation procedure of the edge class $class_{idx}$ may be as shown in the foregoing Formula (2), and a process of acquiring the band class $i_B$ may be as shown in the foregoing Formula (3). Details are not described herein again.

Operation S103: Offset a reconstructed pixel of a color component pixel based on an edge class to obtain an offset reconstructed pixel, and perform encoding processing on a to-be-encoded block based on the offset reconstructed pixel.

Specifically, the computer device may calculate the offset corresponding to the edge class $class_{idx}$, that is, the offset corresponding to the edge class $class_{idx}$ outputted by the CCSAO, such as $\sigma_{CCSAO}[class_{idx}]$ shown in Formula (2). The offset may be added to the reconstructed pixel of the color component pixel to obtain the offset reconstructed pixel. In other words, based on the offset corresponding to the edge class $class_{idx}$, the reconstructed pixel of the color component pixel is offset to obtain the offset reconstructed pixel corresponding to the color component pixel. The reconstructed pixel of the color component pixel may refer to a pixel outputted by deblocking filter. The offset reconstructed pixel may refer to the reconstructed pixel that is outputted through the CCSAO EO and uses the extended co-located luma reconstructed pixel corresponding to the color component pixel to-be-processed in the CCSAO, as shown in $C'_{rec}$ in the foregoing Formula (2). An implementation procedure of the offset reconstructed pixel is not described here again.

Further, when the extended co-located luma reconstructed pixel is used for CCSAO EO classification, encoding processing needs to be performed on both the position of the extended co-located luma reconstructed pixel and the target classification mode corresponding to the color component pixel for calculating the first difference and the second difference, and both are transmitted to the decoder side (the decoding device 40b in the corresponding embodiment shown in FIG. 8).

In one or more embodiments, the computer device may set the position syntactic element for the extended co-located luma reconstructed pixel corresponding to the color component pixel, and set the mode syntactic element for the target classification mode corresponding to the color component pixel. For the color component pixel in the to-be-encoded block, different color component pixels may belong to different edge classes. Each edge class may correspond to an offset. Then, the offsets corresponding to edge classes in the video data may be summed and encoding processing is performed on the total offset to obtain a coding result corresponding to the total offset. In this way, the position syntactic element, the mode syntactic element, and the coding result corresponding to the total offset corresponding to each color component pixel in the to-be-encoded block may be determined as the encoded bitstream corresponding to the to-be-encoded block, and the encoded bitstream may be transmitted to the decoder side. In other words, the computer device may separately code the position of the extended co-located luma reconstructed pixel. For example, the position of the extended co-located luma reconstructed pixel may be indexed through a dedicated syntactic element (namely, a position syntactic element). The target classification mode may reuse the syntactic element (namely, the mode syntactic element) for identifying the classification mode in the existing CCSAO EO classification.

In one or more embodiments, the computer device may set the joint syntactic element for the extended co-located luma reconstructed pixel and the target classification mode corresponding to the color component pixel; and determine an encoded bitstream of the to-be-encoded block based on the joint syntactic element and a total offset corresponding to edge classes in the video data, and the encoded bitstream may be transmitted to the decoder side. In other words, the extended co-located luma reconstructed pixel corresponding to the color component pixel may be encoded together with adjacent pixels (including the first adjacent pixel and the second adjacent pixel) corresponding to the color component pixel. For example, each possible position of the extended co-located luma reconstructed pixel corresponding to the color component pixel and the available classification mode corresponding to each position may be used as a new mode in the CCSAO EO classification. Then, the syntactic element (the joint syntactic element) of the identifier classification mode in the existing CCSAO EO may be reused for transmission. Therefore, a common joint syntactic element may be set for the extended co-located luma reconstructed pixel and the target classification mode corresponding to the color component pixel.

For the color component pixel in the to-be-encoded block, the use of the extended co-located luma reconstructed pixel for CCSAO EO classification may be selected or may not be selected. If a rate-distortion loss when the extended co-located luma reconstructed pixel is not used is less than a rate-distortion loss when the extended co-located luma reconstructed pixel is used, the use of the extended co-located luma reconstructed pixel for CCSAO EO classification may not be selected; or if a rate-distortion loss when the extended co-located luma reconstructed pixel is not used is greater than a rate-distortion loss when the extended co-located luma reconstructed pixel is used, the use of the extended co-located luma reconstructed pixels for CCSAO EO classification may be selected.

In some embodiments, during coding of the video data, a flag bit may be used to identify whether to use the extended co-located luma reconstructed pixel (the extended co-located luma reconstructed pixel herein specifically refers to the luma reconstructed pixel at any position from the position 0 to the position 7 shown in FIG. 10) and the extended classification mode. The flag bit may be referred to as the classification identifier field. For example, if the use of the extended co-located luma reconstructed pixel and the extended classification mode for CCSAO EO classification is selected, the classification identifier field may be set to the first identifier value; or if the use of the extended co-located luma reconstructed pixel and the extended classification mode for CCSAO EO classification is not selected, the classification identifier field may be set to the second identifier value. The first identifier value and the second identifier value are different identifier values, and the first identifier value and the second identifier value may each include, but are not limited to: a symbol, a value, a numeral, and the like.

The foregoing classification identifier field may be transmitted in high level syntax (HLS). The classification identifier field may be stored in a sequence parameter set (SPS), or the PictureHeader, or the SliceHeader, or the APS. This is not limited in this application. If the classification identifier field is stored in the SPS, the classification identifier field is configured for representing whether the video data uses the extended co-located luma reconstructed pixel and the extended classification mode. If the classification identifier field is stored in the PictureHeader, the classification identifier field is configured for representing whether the current image frame uses the extended co-located luma reconstructed pixel and the extended classification mode. If the classification identifier field is stored in the SliceHeader, the classification identifier field is configured for representing whether a current slice uses the extended co-located luma reconstructed pixel and the extended classification mode. If the classification identifier field is stored in the APS, the classification identifier field is configured for representing whether the loop filtering uses the extended co-located luma reconstructed pixel and the extended classification mode.

In some embodiments, different flag bits are used to identify whether to use the extended co-located luma reconstructed pixel and the extended classification mode for CCSAO EO classification. In this case, the classification identifier field may include an extended co-located luma identifier field and an extended mode identifier field. For example, if the use of the extended co-located luma reconstructed pixel for CCSAO EO classification is selected, the extended co-located luma identifier field may be set to the first identifier value; or if the use of the extended co-located luma reconstructed pixel for CCSAO EO classification is not selected, the extended co-located luma identifier field may be set to the second identifier value. If the use of the extended classification mode for CCSAO EO classification is selected, the extended mode identifier field may also be set to the first identifier value; or if the use of the extended classification mode for CCSAO EO classification is not selected, the extended mode identifier field may also be set to the second identifier value. Both the extended co-located luma identifier field and the extended mode identifier field may be transmitted in the HLS, and the classification identifier field may be stored in the SPS, or the PictureHeader, or the SliceHeader, or the APS.

When it is determined to use one or two of the extended co-located luma reconstructed pixel and the extended classification mode for CCSAO EO classification of the video data, the classification identifier field may be set to the first identifier value. In this way, encoding processing may be subsequently performed on the video data based on the technical solutions of the embodiments of this application. If it is determined that the extended co-located luma reconstructed pixel and the extended classification mode are not used for the video data, the classification identifier field may be set to the second identifier value. In this way, encoding processing may be subsequently performed on the video data based on an existing manner.

In the embodiments of this application, the encoding device may perform CCSAO EO classification based on the extended co-located luma reconstructed pixel corresponding to the color component pixel. In addition, the decoding device may also perform CCSAO EO classification by using the extended classification mode (including other available classification modes than the foregoing four classification modes of horizontal, vertical, diagonal, and anti-diagonal), which can improve class accuracy of the CCSAO EO of the color component pixel, and can further improve the overall coding performance for the video data.

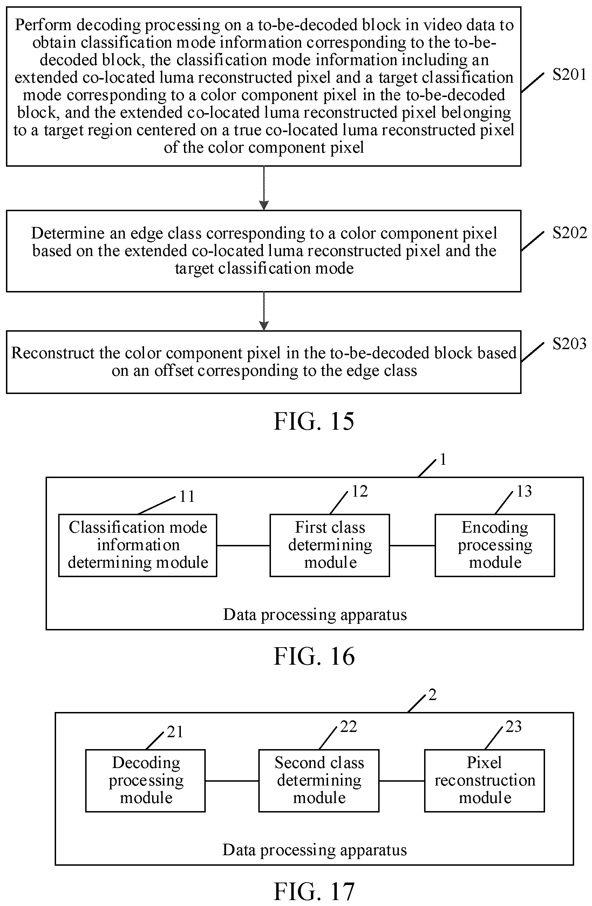

FIG. 15 is a schematic flowchart of another data processing method according to an embodiment of this application. It may be understood that, the data processing method may be performed by a computer device, and the computer device may be the decoding device 40b shown in FIG. 8, so that the data processing method corresponds to a decoding method. As shown in FIG. 15, the data processing method may include the following operation S201 to operation S203:

Operation S201: Perform decoding processing on a to-be-decoded block in video data to obtain classification mode information corresponding to the to-be-decoded block, the classification mode information including an extended co-located luma reconstructed pixel and a target classification mode corresponding to a color component pixel in the to-be-decoded block, and the extended co-located luma reconstructed pixel belonging to a target region centered on a true co-located luma reconstructed pixel of the color component pixel.

Specifically, the computer device may parse a position syntactic element corresponding to the color component pixel to obtain the extended co-located luma reconstructed pixel corresponding to the color component pixel; and parse a mode syntactic element corresponding to the color component pixel to obtain a target classification mode corresponding to the color component pixel, and determine the extended co-located luma reconstructed pixel and the target classification mode as the classification mode information corresponding to the to-be-decoded block. In other words, the computer device may parse the position syntactic element (a syntactic element related to the extended co-located luma reconstructed pixel position) to determine the position of the extended co-located luma reconstructed pixel, determine the target classification mode by parsing the mode syntactic element (a syntactic element related to the classification mode), and then calculate a difference with a surrounding pixel of the region covered by the target classification mode centering on the position of the extended co-located luma reconstructed pixel to perform edge classification.

In one or more embodiments, the computer device may parse a joint syntactic element corresponding to the color component pixel to obtain the extended co-located luma reconstructed pixel and the target classification mode corresponding to the color component pixel, and determine the extended co-located luma reconstructed pixel and the target classification mode as the classification mode information corresponding to the to-be-decoded block. In other words, the computer device may parse the joint syntactic element (a syntactic element related to the classification mode), and then define a position of the extended co-located luma reconstructed pixel and the target classification mode that can be determined for classification based on a mode jointly set by the encoder side and the decoder side (the mode is consistent at the encoder side and the decoder side).

Before classification mode information corresponding to the color component pixel in the to-be-decoded block is parsed, the computer device may first parse a classification identifier field in a sequence parameter set corresponding to the video data. If the classification identifier field is a first identifier value, it is determined that the video data uses the extended co-located luma reconstructed pixel; or if the classification identifier field is a second identifier value, it is determined that the video data does not use the extended co-located luma reconstructed pixel. For example, if the classification identifier field in the sequence parameter set corresponding to the parsed video data is the first identifier value, it indicates that the video data uses the extended co-located luma reconstructed pixel and the extended classification mode. If the classification identifier field in the PictureHeader is parsed to be the second identifier value when decoding processing is performed on an image frame in the video data, it indicates that a currently processed image frame does not use the extended co-located luma reconstructed pixel and the extended classification mode.

In some embodiments, if the classification identifier field includes an extended co-located luma identifier field for the extended co-located luma reconstructed pixel and an extended mode identifier field for the extended classification mode, the extended co-located luma identifier field and the extended mode identifier field may be sequentially parsed first to determine whether the video data uses the extended co-located luma reconstructed pixel and the extended classification mode based on a parsing result. If the parsing result is that the video data uses one or two of the extended co-located luma reconstructed pixel and the extended classification mode for CCSAO EO classification, subsequent decoding processing may be performed based on the technical solutions provided in the embodiments of this application; or if the parsing result is that the video data does not use the extended co-located luma reconstructed pixel and the extended classification mode for CCSAO EO classification, subsequent decoding processing may be performed based on an existing solution.

Operation S202: Determine an edge class corresponding to a color component pixel based on an extended co-located luma reconstructed pixel and a target classification mode.

For an implementation process of operation S202, reference may be made to operation S102 in the foregoing embodiment corresponding to FIG. 9. Details are not described herein again.

Operation S203: Reconstruct the color component pixel in the to-be-decoded block based on an offset corresponding to the edge class.

Specifically, the computer device may determine the offset reconstructed pixel based on the offset corresponding to the edge class, and the color component pixel in the to-be-decoded block may be reconstructed through the offset reconstructed pixel. Specifically, the total offset corresponding to each edge class in the video data may be parsed, and the edge class corresponding to the color component pixel in the current to-be-decoded block may be determined by the target classification mode and the extended co-located luma reconstructed pixel obtained through parsing. Then, the offset corresponding to the edge class may be determined from the total offset, that is, the offset corresponding to a single edge class. Through the offset corresponding to the single edge class, the color component pixel belonging to the edge class may be reconstructed.

A decoding processing process of the video data is an inverse process of an encoding processing process of the video data. Therefore, the decoding processing process of the video data may be referred to the description of the foregoing embodiment corresponding to FIG. 9, and details are not described herein again.

In the embodiments of this application, the decoding device may perform CCSAO EO classification based on the extended co-located luma reconstructed pixel corresponding to the color component pixel. In addition, the decoding device may also perform CCSAO EO classification by using the extended classification mode (including other available classification modes than the foregoing four classification modes of horizontal, vertical, diagonal, and anti-diagonal), which can improve class accuracy of the CCSAO EO of the color component pixel, and can further improve the overall decoding performance for the video data.

FIG. 16 is a schematic structural diagram of a data processing apparatus according to an embodiment of this application. The data processing apparatus may be a computer program (including program code) running on an encoding device. For example, the data processing apparatus is an application software in the encoding device. Referring to FIG. 16, the data processing apparatus 1 may include a classification mode information determining module 11, a first class determining module 12, and an encoding processing module 13.

The classification mode information determining module 11 is configured to determine classification mode information corresponding to a to-be-encoded block in video data, the classification mode information including an extended co-located luma reconstructed pixel and a target classification mode corresponding to a color component pixel in the to-be-encoded block, and the extended co-located luma reconstructed pixel belonging to a target region centered on a true co-located luma reconstructed pixel of the color component pixel;

The first class determining module 12 is configured to determine an edge class corresponding to the color component pixel based on the extended co-located luma reconstructed pixel and the target classification mode.

The encoding processing module 13 is configured to offset a reconstructed pixel of the color component pixel based on the edge class to obtain an offset reconstructed pixel, and perform encoding processing on the to-be-encoded block based on the offset reconstructed pixel.

In one or more embodiments, the classification mode information determining module 11 is further configured to:

acquire a color component pixel included in the to-be-encoded block, and acquire a true co-located luma reconstructed pixel corresponding to the color component pixel;

determine a target region with a target size by using the true co-located luma reconstructed pixel as a region center, and determine the extended co-located luma reconstructed pixel corresponding to the color component pixel in the target region; and

acquire a candidate classification mode set corresponding to the color component pixel, determine a target classification mode corresponding to the color component pixel in the candidate classification mode set, and add the extended co-located luma reconstructed pixel and the target classification mode to the classification mode information corresponding to the to-be-encoded block.

In one or more embodiments, that the classification mode information determining module 11 determines the extended co-located luma reconstructed pixel corresponding to the color component pixel in the target region includes:

determining luma reconstructed pixels other than those at vertex positions in the target region as a candidate luma pixel set corresponding to the color component pixel;

separately performing rate-distortion optimization processing on the color component pixel based on each luma reconstructed pixel in the candidate luma pixel set to obtain a first rate-distortion loss corresponding to each luma reconstructed pixel in the candidate luma pixel set; and

determining a luma reconstructed pixel corresponding to a smallest first rate-distortion loss as the extended co-located luma reconstructed pixel corresponding to the color component pixel.

In one or more embodiments, that the classification mode information determining module 11 acquires a candidate classification mode set corresponding to the color component pixel, and determines a target classification mode corresponding to the color component pixel in the candidate classification mode set includes:

determining the candidate classification mode set corresponding to the color component pixel based on a position of the extended co-located luma reconstructed pixel in the target region, a coverage range of a classification mode in the candidate classification mode set being less than or equal to the target region, and the candidate classification mode set including a horizontal classification mode and a vertical classification mode;

separately performing rate-distortion optimization processing on the color component pixel based on each classification mode in the candidate classification mode set to obtain a second rate-distortion loss corresponding to each classification mode in the candidate classification mode set; and

determining a classification mode corresponding to a smallest second rate-distortion loss as the target classification mode corresponding to the color component pixel.

In one or more embodiments, the extended co-located luma reconstructed pixel is any luma reconstructed pixel in the target region; and

the data processing apparatus 1 is further configured to
fill, if the candidate classification mode set has a classification mode whose coverage range is greater than the target region, an edge pixel in the target region into an adjacent region of the target region to obtain a mode coverage range, the mode coverage range being configured for determining the target classification mode from the candidate classification mode set.

In one or more embodiments, when the extended co-located luma reconstructed pixel is any luma reconstructed pixel in the target region, the candidate classification mode set includes a basic classification mode and an extended classification mode, or the candidate classification mode set includes an extended classification mode, the basic classification mode including a horizontal classification mode, a vertical classification mode, a diagonal classification mode, and an anti-diagonal classification mode, and the extended classification mode including an available classification mode other than the basic classification mode.

In one or more embodiments, the color component pixel includes a luma component pixel or a chroma component pixel.

In one or more embodiments, the color component pixel includes a luma component pixel; and a first class determining module 12 is further configured to:

determine a first adjacent pixel and a second adjacent pixel corresponding to the extended co-located luma reconstructed pixel based on the target classification mode;

acquire a first difference between the first adjacent pixel and the extended co-located luma reconstructed pixel, and acquiring a second difference between the second adjacent pixel and the extended co-located luma reconstructed pixel;

acquire a first co-located chroma pixel and a second co-located chroma pixel corresponding to the true co-located luma reconstructed pixel;

determine a band class to which the luma component pixel belongs based on the extended co-located luma reconstructed pixel, the first co-located chroma pixel, and the second co-located chroma pixel; and

determine the edge class corresponding to the color component pixel based on the band class, the first difference, and the second difference.

That the first class determining module 12 determines a band class to which the luma component pixel belongs based on the extended co-located luma reconstructed pixel, the first co-located chroma pixel, and the second co-located chroma pixel includes:

acquiring a first product of the extended co-located luma reconstructed pixel and a total number of band classes on a luma component, acquiring a second product of the first co-located chroma pixel and a total number of band classes on a first chroma component, and acquiring a third product of the second co-located chroma pixel and a total number of band classes on a second chroma component; and

determining the band class to which the luma component pixel belongs based on numerical relationships between a pixel value bit depth and the first product, the second product, and the third product respectively.

In one or more embodiments, the color component pixel includes a luma component pixel; and a first class determining module 12 is further configured to:

determine a first adjacent pixel and a second adjacent pixel corresponding to the extended co-located luma reconstructed pixel based on the target classification mode;

acquire a first difference between the first adjacent pixel and the extended co-located luma reconstructed pixel, and acquiring a second difference between the second adjacent pixel and the extended co-located luma reconstructed pixel;

acquire a first co-located chroma pixel and a second co-located chroma pixel corresponding to the true co-located luma reconstructed pixel;

determine a band class to which the luma component pixel belongs based on the true co-located luma reconstructed pixel, the first co-located chroma pixel, and the second co-located chroma pixel; and

determine the edge class corresponding to the color component pixel based on the band class, the first difference, and the second difference.

In one or more embodiments, the color component pixel includes a luma component pixel; and a first class determining module 12 is further configured to:

determine a third adjacent pixel and a fourth adjacent pixel corresponding to the true co-located luma reconstructed pixel based on the target classification mode;

acquire a third difference between the third adjacent pixel and the true co-located luma reconstructed pixel, and acquire a fourth difference between the fourth adjacent pixel and the true co-located luma reconstructed pixel;

acquire a first co-located chroma pixel and a second co-located chroma pixel corresponding to the true co-located luma reconstructed pixel;

determine a band class to which the luma component pixel belongs based on the extended co-located luma reconstructed pixel, the first co-located chroma pixel, and the second co-located chroma pixel; and

determine the edge class corresponding to the color component pixel based on the band class, the third difference, and the fourth difference.

In one or more embodiments, that the encoding processing module 13 performs encoding processing on the to-be-encoded block through an offset reconstructed pixel includes:

setting a position syntactic element for the extended co-located luma reconstructed pixel, and setting a mode syntactic element for the target classification mode; and

determining an offset corresponding to the edge class, and obtaining an encoded bitstream of the to-be-encoded block based on the position syntactic element, the mode syntactic element, and the offset.

In one or more embodiments, that the encoding processing module 13 performs encoding processing on the to-be-encoded block through an offset reconstructed pixel includes:

setting a joint syntactic element for the extended co-located luma reconstructed pixel and the target classification mode; and

determining an offset corresponding to the edge class, and obtaining an encoded bitstream of the to-be-encoded block based on the joint syntactic element and the offset.

In the embodiments of this application, the encoding device may perform CCSAO EO classification based on the extended co-located luma reconstructed pixel corresponding to the color component pixel. In addition, the decoding device may also perform CCSAO EO classification by using the extended classification mode (including other available classification modes than the foregoing four classification modes of horizontal, vertical, diagonal, and anti-diagonal), which can improve class accuracy of the CCSAO EO of the color component pixel, and can further improve the overall coding performance for the video data.

FIG. 17 is a schematic structural diagram of another data processing apparatus according to an embodiment of this application. The data processing apparatus may be a computer program (including program code) running on a decoding device. For example, the data processing apparatus is an application software in the decoding device. Referring to FIG. 17, the data processing apparatus 2 may include a decoding processing module 21, a second class determining module 22, and a pixel reconstruction module 23.

The decoding processing module 21 is configured to perform decoding processing on a to-be-decoded block in video data to obtain classification mode information corresponding to the to-be-decoded block, the classification mode information including an extended co-located luma reconstructed pixel and a target classification mode corresponding to a color component pixel in the to-be-decoded block, and the extended co-located luma reconstructed pixel belonging to a target region centered on a true co-located luma reconstructed pixel of the color component pixel.

The second class determining module 22 is configured to determine an edge class corresponding to the color component pixel based on the extended co-located luma reconstructed pixel and the target classification mode.

The pixel reconstruction module 23 is configured to reconstruct the color component pixel in the to-be-decoded block based on an offset corresponding to the edge class.

In one or more embodiments, the decoding processing module 21 is further configured to:

parse a position syntactic element corresponding to the color component pixel to obtain the extended co-located luma reconstructed pixel corresponding to the color component pixel; and

parse a mode syntactic element corresponding to the color component pixel to obtain a target classification mode corresponding to the color component pixel, and determine the extended co-located luma reconstructed pixel and the target classification mode as the classification mode information corresponding to the to-be-decoded block.

In one or more embodiments, the decoding processing module 21 is further configured to parse a joint syntactic element corresponding to the color component pixel to obtain the extended co-located luma reconstructed pixel and the target classification mode corresponding to the color component pixel, and determine the extended co-located luma reconstructed pixel and the target classification mode as the classification mode information corresponding to the to-be-decoded block.

The data apparatus 2 is further configured to:
parse a classification identifier field in a sequence parameter set corresponding to the video data.

If the classification identifier field is a first identifier value, it is determined that the video data uses the extended co-located luma reconstructed pixel; or
if the classification identifier field is a second identifier value, it is determined that the video data does not use the extended co-located luma reconstructed pixel.

In the embodiments of this application, the decoding device may perform CCSAO EO classification based on the extended co-located luma reconstructed pixel corresponding to the color component pixel. In addition, the decoding device may also perform CCSAO EO classification by using the extended classification mode (including other available classification modes than the foregoing four classification modes of horizontal, vertical, diagonal, and anti-diagonal), which can improve class accuracy of the CCSAO EO of the color component pixel, and can further improve the overall decoding performance for the video data.

According to the embodiments of this application, units of the data processing apparatus 1 shown in FIG. 16 and the data processing apparatus 2 shown in FIG. 17 may be separately or wholly combined into one or several other units, or one (or more) of the units herein may further be divided into a plurality of units of smaller functions. In this way, same operations may be implemented, and the implementation of the technical effects of the embodiments of this application is not affected. The foregoing units are divided based on logical functions. In an actual application, a function of one unit may also be implemented by a plurality of units, or functions of a plurality of units are implemented by one unit. In other embodiments of this application, the data processing apparatus 2 may also include other units. In an actual application, the functions may also be cooperatively implemented by other units and may be cooperatively implemented by a plurality of units.

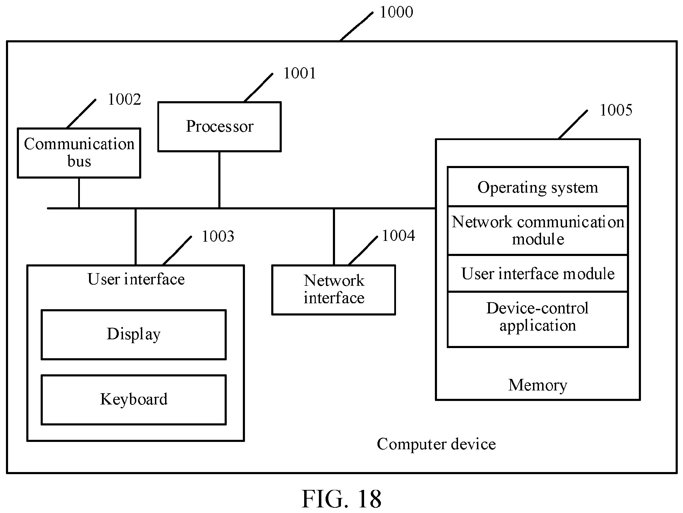

Further, FIG. 18 is a schematic structural diagram of a computer device according to an embodiment of this application. As shown in FIG. 18, the computer device 1000 may be a terminal device, or may be a server. This is not limited in this application. For ease of understanding, in this application, using the computer device is the terminal device as an example. The computer device 1000 may include: a processor 1001, a network interface 1004, and a memory 1005. In addition, the computer device 1000 may further include: a user interface 1003 and at least one communication bus 1002. The communication bus 1002 is configured to implement connection and communication between the components. The user interface 1003 may further include a standard wired interface and a standard wireless interface. In some embodiments, the network interface 1004 may include a standard wired interface and a standard wireless interface (such as a Wi-Fi interface). The memory 1005 may be a high-speed RAM memory, or may be a non-volatile memory, for example, at least one magnetic disk memory. In some embodiments, the memory 1005 may further be at least one storage apparatus that is located far away from the foregoing processor 1001. As shown in FIG. 18, the memory 1005 used as a computer-readable storage medium may include an operating system, a network communication module, a user interface module, and a device-control application.

The network interface 1004 in the computer device 1000 may further provide a network communication function. In some embodiments, the user interface 1003 may further include a display and a keyboard. In the computer device 1000 shown in FIG 18, the network interface 1004 may provide a network communication function; and the user interface 1003 is mainly configured to provide an input interface for a user.

When the computer device 1000 is an encoding device, the processor 1001 may be configured to invoke the device-control application stored in the memory 1005 to implement the data processing method on an encoding device side provided in this embodiment of this application.

When the computer device 1000 is a decoding device, the processor 1001 may be configured to invoke the device-control application stored in the memory 1005 to implement the data processing method on a decoding device side provided in this embodiment of this application.

The computer device 1000 described in this embodiment of this application can implement the descriptions of the data processing method in the foregoing embodiment corresponding to FIG. 9 or FIG. 15, and can also implement the descriptions of the data processing apparatus 1 in the foregoing embodiment corresponding to FIG. 16 or the data processing apparatus 2 in the foregoing embodiment corresponding to FIG. 17. Details are not described herein again. In addition, the description of beneficial effects of the same method is not described herein again.

In addition, the embodiments of this application further provide a computer-readable storage medium. The computer-readable storage medium stores a computer program executed by the data processing apparatus 1 or the data processing apparatus 2 mentioned above, and the computer program includes program instructions. When executing the program instructions, the processor can perform the descriptions of data processing method in the embodiment corresponding to FIG. 9 or FIG. 15. Therefore, details are not described herein again. In addition, the description of beneficial effects of the same method is not described herein again. For technical details that are not disclosed in the embodiments of the computer-readable storage medium of this application, refer to the method embodiments of this application. As an example, the program instructions may be deployed to be executed on a computing device, or deployed to be executed on a plurality of computing devices at the same location, or deployed to be executed on a plurality of computing devices that are distributed in a plurality of locations and interconnected by using a communication network. The plurality of computing devices that are distributed in the plurality of locations and interconnected by using the communication network may form a blockchain system.

In addition, the embodiments of this application further provide a computer program product or a computer program. The computer program product or the computer program may include computer instructions, and the computer instructions may be stored in a computer-readable storage medium. A processor of a computer device reads the computer instructions from the computer-readable storage medium, and may execute the computer instructions, to cause the computer device to perform the descriptions of the data processing method in the embodiment corresponding to FIG. 9 or FIG. 15. Therefore, details are not described herein again. In addition, the description of beneficial effects of the same method is not described herein again. For technical details that are not disclosed in the embodiments of the computer program product or computer program in this application, refer to the descriptions of the method embodiments of this application.

For ease of description, the foregoing method embodiments are described as a series of action combinations. However, a person skilled in the art is to be known that this application is not limited to the described order of the actions because some operations may be performed in another order or performed simultaneously according to this application. In addition, a person skilled in the art is also to learn that the embodiments described in this specification are all exemplary embodiments, and the involved actions and modules are not necessarily required to this application.

A sequence of the operations of the method in the embodiments of this application may be adjusted, and certain operations may also be combined or removed according to an actual requirement.

The modules in the apparatus in the embodiments of this application may be combined, divided, and deleted according to an actual requirement.

A person of ordinary skill in the art may understand that all or some of the procedures of the methods in the foregoing embodiments may be implemented by a computer program instructing relevant hardware. The computer program may be stored in a computer-readable storage medium. When the program is executed, the procedures of the foregoing method embodiments may be performed. The storage medium may be a magnetic disc, an optical disc, a read-only memory (ROM), a random access memory (RAM), or the like.

What is disclosed above is merely exemplary embodiments of this application, and certainly is not intended to limit the protection scope of this application. Therefore, equivalent variations made in accordance with the claims of this application shall fall within the scope of this application.

**Claims**

1. A data processing method, performed by a computer device, the method comprising:

   determining classification mode information corresponding to a to-be-encoded block in video data, the classification mode information comprising an extended co-located luma reconstructed pixel and a target classification mode corresponding to a color component pixel in the to-be-encoded block, the extended co-located luma reconstructed pixel belonging to a target region centered on a true co-located luma reconstructed pixel of the color component pixel;
   determining an edge class corresponding to the color component pixel based on the extended co-located luma reconstructed pixel and the target classification mode; and
   offsetting a reconstructed pixel of the color component pixel based on the edge class to obtain an offset reconstructed pixel, and performing encoding processing on the to-be-encoded block based on the offset reconstructed pixel.

2. The method according to claim 1, wherein the determining classification mode information corresponding to a to-be-encoded block in video data comprises:

acquiring a color component pixel comprised in the to-be-encoded block, and acquiring a true co-located luma reconstructed pixel corresponding to the color component pixel;

determining a target region with a target size by using the true co-located luma reconstructed pixel as a region center, and determining the extended co-located luma reconstructed pixel corresponding to the color component pixel in the target region; and

acquiring a candidate classification mode set corresponding to the color component pixel, determining a target classification mode corresponding to the color component pixel in the candidate classification mode set, and adding the extended co-located luma reconstructed pixel and the target classification mode to the classification mode information corresponding to the to-be-encoded block.

3. The method according to claim 2, wherein the determining the extended co-located luma reconstructed pixel corresponding to the color component pixel in the target region comprises:

determining luma reconstructed pixels other than those at vertex positions in the target region as a candidate luma pixel set corresponding to the color component pixel;

separately performing rate-distortion optimization processing on the color component pixel based on each luma reconstructed pixel in the candidate luma pixel set to obtain a first rate-distortion loss corresponding to each luma reconstructed pixel in the candidate luma pixel set; and

determining a luma reconstructed pixel corresponding to a smallest first rate-distortion loss as the extended co-located luma reconstructed pixel corresponding to the color component pixel.

4. The method according to claim 3, wherein the acquiring a candidate classification mode set corresponding to the color component pixel, and determining a target classification mode corresponding to the color component pixel in the candidate classification mode set comprises:

determining the candidate classification mode set corresponding to the color component pixel based on a position of the extended co-located luma reconstructed pixel in the target region, a coverage range of a classification mode in the candidate classification mode set being less than or equal to the target region, and the candidate classification mode set comprising a horizontal classification mode and a vertical classification mode;

separately performing rate-distortion optimization processing on the color component pixel based on each classification mode in the candidate classification mode set to obtain a second rate-distortion loss corresponding to each classification mode in the candidate classification mode set; and

determining a classification mode corresponding to a smallest second rate-distortion loss as the target classification mode corresponding to the color component pixel.

5. The method according to claim 2, wherein the extended co-located luma reconstructed pixel is any luma reconstructed pixel in the target region; and

the method further comprises:

filling, if the candidate classification mode set has a classification mode whose coverage range is greater than the target region, an edge pixel in the target region into an adjacent region of the target region to obtain a mode coverage range, the mode coverage range being configured for determining the target classification mode from the candidate classification mode set.

6. The method according to claim 2, wherein when the extended co-located luma reconstructed pixel is any luma reconstructed pixel in the target region, the candidate classification mode set comprises a basic classification mode and an extended classification mode, or the candidate classification mode set comprises an extended classification mode, the basic classification mode comprising a horizontal classification mode, a vertical classification mode, a diagonal classification mode, and an anti-diagonal classification mode, and the extended classification mode comprising an available classification mode other than the basic classification mode.

7. The method according to claim 1, wherein the color component pixel comprises a luma component pixel or a chroma component pixel.

8. The method according to claim 1, wherein the color component pixel comprises a luma component pixel; and the determining an edge class corresponding to the color component pixel based on the extended co-located luma reconstructed pixel and the target classification mode comprises:

determining a first adjacent pixel and a second adjacent pixel corresponding to the extended co-located luma reconstructed pixel based on the target classification mode;

acquiring a first difference between the first adjacent pixel and the extended co-located luma reconstructed pixel, and acquiring a second difference between the second adjacent pixel and the extended co-located luma reconstructed pixel;

acquiring a first co-located chroma pixel and a second co-located chroma pixel corresponding to the true co-located luma reconstructed pixel;

determining a band class to which the luma component pixel belongs based on the extended co-located luma reconstructed pixel, the first co-located chroma pixel, and the second co-located chroma pixel; and

determining the edge class corresponding to the color component pixel based on the band class, the first difference, and the second difference.

9.  The method according to claim 8, wherein the determining a band class to which the luma component pixel belongs based on the extended co-located luma reconstructed pixel, the first co-located chroma pixel, and the second co-located chroma pixel comprises:

acquiring a first product of the extended co-located luma reconstructed pixel and a total number of band classes on a luma component, acquiring a second product of the first co-located chroma pixel and a total number of band classes on a first chroma component, and acquiring a third product of the second co-located chroma pixel and a total number of band classes on a second chroma component; and

determining the band class to which the luma component pixel belongs based on numerical relationships between a pixel value bit depth and the first product, the second product, and the third product respectively.

10. The method according to claim 1, wherein the color component pixel comprises a luma component pixel; and the determining an edge class corresponding to the color component pixel based on the extended co-located luma reconstructed pixel and the target classification mode comprises:

determining a first adjacent pixel and a second adjacent pixel corresponding to the extended co-located luma reconstructed pixel based on the target classification mode;

acquiring a first difference between the first adjacent pixel and the extended co-located luma reconstructed pixel, and acquiring a second difference between the second adjacent pixel and the extended co-located luma reconstructed pixel;

acquiring a first co-located chroma pixel and a second co-located chroma pixel corresponding to the true co-located luma reconstructed pixel;

determining a band class to which the luma component pixel belongs based on the true co-located luma reconstructed pixel, the first co-located chroma pixel, and the second co-located chroma pixel; and

determining the edge class corresponding to the color component pixel based on the band class, the first difference, and the second difference.

11. The method according to claim 1, wherein the color component pixel comprises a luma component pixel; and the determining an edge class corresponding to the color component pixel based on the extended co-located luma reconstructed pixel and the target classification mode comprises:

determining a third adjacent pixel and a fourth adjacent pixel corresponding to the true co-located luma reconstructed pixel based on the target classification mode;

acquiring a third difference between the third adjacent pixel and the true co-located luma reconstructed pixel, and acquiring a fourth difference between the fourth adjacent pixel and the true co-located luma reconstructed pixel;

acquiring a first co-located chroma pixel and a second co-located chroma pixel corresponding to the true co-located luma reconstructed pixel;

determining a band class to which the luma component pixel belongs based on the extended co-located luma reconstructed pixel, the first co-located chroma pixel, and the second co-located chroma pixel; and

determining the edge class corresponding to the color component pixel based on the band class, the third difference, and the fourth difference.

12. The method according to any one of claims 1 to 11, wherein the performing encoding processing on the to-be-encoded block based on the offset reconstructed pixel comprises:

setting a position syntactic element for the extended co-located luma reconstructed pixel, and setting a mode syntactic element for the target classification mode; and

determining an offset corresponding to the edge class, and obtaining an encoded bitstream of the to-be-encoded block based on the position syntactic element, the mode syntactic element, and the offset.

13. The method according to any one of claims 1 to 11, wherein the performing encoding processing on the to-be-encoded block based on the offset reconstructed pixel comprises:

setting a joint syntactic element for the extended co-located luma reconstructed pixel and the target classification mode; and

determining an offset corresponding to the edge class, and obtaining an encoded bitstream of the to-be-encoded block based on the joint syntactic element and the offset.

14. A data processing method, performed by a computer device, the method comprising:

performing decoding processing on a to-be-decoded block in video data to obtain classification mode information corresponding to the to-be-decoded block; the classification mode information comprising an extended co-located luma reconstructed pixel and a target classification mode corresponding to a color component pixel in the to-be-decoded block, the extended co-located luma reconstructed pixel belonging to a target region centered on a true co-located luma reconstructed pixel of the color component pixel;

determining an edge class corresponding to the color component pixel based on the extended co-located luma reconstructed pixel and the target classification mode; and

reconstructing the color component pixel in the to-be-decoded block based on an offset corresponding to the edge class.

15. The method according to claim 14, wherein the performing decoding processing on a to-be-decoded block in video data to obtain classification mode information corresponding to the to-be-decoded block comprises:

parsing a position syntactic element corresponding to the color component pixel to obtain the extended co-located luma reconstructed pixel corresponding to the color component pixel; and

parsing a mode syntactic element corresponding to the color component pixel to obtain a target classification mode corresponding to the color component pixel, and determining the extended co-located luma reconstructed pixel and the target classification mode as the classification mode information corresponding to the to-be-decoded block.

16. The method according to claim 14, wherein the performing decoding processing on a to-be-decoded block in video data to obtain classification mode information corresponding to the to-be-decoded block comprises:
parsing a joint syntactic element corresponding to the color component pixel to obtain the extended co-located luma reconstructed pixel and the target classification mode corresponding to the color component pixel, and determining the extended co-located luma reconstructed pixel and the target classification mode as the classification mode information corresponding to the to-be-decoded block.

17. The method according to any one of claims 14 to 16, wherein the method further comprises:

parsing a classification identifier field in a sequence parameter set corresponding to the video data;

determining that the video data uses the extended co-located luma reconstructed pixel if the classification identifier field is a first identifier value; or

determining that the video data does not use the extended co-located luma reconstructed pixel if the classification identifier field is a second identifier value.

18. A computer device, comprising a memory and a processor;
the memory being connected to the processor, the memory being configured to store a computer program, and the processor being configured to invoke the computer program, to cause the computer device to perform the method according to any one of claims 1 to 13, or to perform the method according to any one of claims 14 to 17.

19. A computer-readable storage medium, having a computer program stored therein, the computer program, when executed by a processor, implementing the method according to any one of claims 1 to 13, or implementing the method according to any one of claims 14 to 17.

**20.** A computer program product, comprising a computer program, the computer program, when executed by a processor, implementing the method according to any one of claims 1 to 13, or implementing the method according to any one of claims 14 to 17.

10a

Transform,
Quantization

Entropy
Coding

Encoded
bitstream

Anti-quantization,
Anti-transform

Prediction

Intra
prediction

Inter
prediction

Motion
estimation

Loop filtering

Decoded
picture buffer

FIG. 1

Bilateral filter

Bilateral filter
on chroma

Luma mapping
with chroma
scaling

Deblocking
filter

Sample
adaptive offset

Adaptive loop
filtering

Cross-component
adaptive loop
filtering

Cross-component
sample adaptive
offset

FIG. 2

```
┌─────────────┐        ┌─────────────┐
│ Y component │        │Perform sample│
│pixel obtained│──────▶│adaptive offset on│
│  through    │        │the Y component│                              ┌──────────────┐
│deblocking filter│    │    pixel    │──────────────────────────┐    │Perform cross-│
└─────────────┘        └─────────────┘                          │    │component sample│         ⊕───▶ Offset Y
                                                                 └───▶│adaptive offset on the│           component
                                                              ──────▶│ Y component  │                    pixel
                                                              ──────▶└──────────────┘
┌─────────────┐        ┌─────────────┐
│ U component │        │Perform sample│
│pixel obtained│──────▶│adaptive offset on│
│  through    │        │the U component│                             ┌──────────────┐
│deblocking filter│    │    pixel    │──────────────────────────┐   │Perform cross-│
└─────────────┘        └─────────────┘                          │   │component sample│          ⊕───▶ Offset U
                                                                 └──▶│adaptive offset on the│            component
                                                             ──────▶│ U component  │                      pixel
                                                             ──────▶└──────────────┘
┌─────────────┐        ┌─────────────┐
│ V component │        │Perform sample│
│pixel obtained│──────▶│adaptive offset on│
│  through    │        │the V component│                             ┌──────────────┐
│deblocking filter│    │    pixel    │──────────────────────────┐   │Perform cross-│
└─────────────┘        └─────────────┘                          │   │component sample│          ⊕───▶ Offset V
                                                                 └──▶│adaptive offset on the│            component
                                                                    │ V component  │                      pixel
                                                                    └──────────────┘
```

FIG. 3

FIG. 4

FIG. 5

Offset luma component pixel → $R_Y$ → Reconstructed pixel on a luma component outputted by adaptive loop filtering → Y

Reconstructed pixel on a blue chroma component Cb outputted by cross-component adaptive loop filtering → $R_{Cb}$ → ⊕ → Cb

Reconstructed pixel on a red chroma component Cr outputted by cross-component adaptive loop filtering → $R_{Cr}$ → ⊕ → Cr

Offset blue chroma component pixel Cb →

Offset red chroma component pixel Cr →

Reconstructed pixels on chroma components (Cb and Cr) outputted by adaptive loop filtering

FIG. 6

$(x_C, y_C)$

● Supported luma component pixels

◌ Chroma component pixel position (x, y)

FIG. 7

40a

40b

FIG. 8

Determine classification mode information corresponding to a to-be-encoded block in video data, the classification mode information including an extended co-located luma reconstructed pixel and a target classification mode corresponding to a color component pixel in the to-be-encoded block, and the extended co-located luma reconstructed pixel belonging to a target region centered on a true co-located luma reconstructed pixel of the color component pixel

S101

Determine an edge class corresponding to a color component pixel based on the extended co-located luma reconstructed pixel and the target classification mode

S102

Offset a reconstructed pixel of the color component pixel based on the edge class to obtain an offset reconstructed pixel, and perform encoding processing on the to-be-encoded block based on the offset reconstructed pixel

S103

FIG. 9

```
( 0 )    ( 1 )    ( 2 )

( 3 )    ( c0 )   ( 4 )

( 5 )    ( 6 )    ( 7 )
```

FIG. 10

FIG. 11

FIG. 12

70a

| a | c | b |
|---|---|---|
|   |   |   |
|   |   |   |

70b

| a |   |   |
|---|---|---|
| c |   |   |
| b |   |   |

70c

|   |   | a |
|---|---|---|
|   |   | c |
|   |   | b |

70d

|   |   |   |
|---|---|---|
|   |   |   |
| a | c | b |

FIG. 13

61a

| | | | | |
|---|---|---|---|---|
| | P0 | P1 | P2 | |
| | P3 | c0 | P4 | |
| | P5 | P6 | P7 | |
| | | | | |

61b

FIG. 14

Perform decoding processing on a to-be-decoded block in video data to obtain classification mode information corresponding to the to-be-decoded block, the classification mode information including an extended co-located luma reconstructed pixel and a target classification mode corresponding to a color component pixel in the to-be-decoded block, and the extended co-located luma reconstructed pixel belonging to a target region centered on a true co-located luma reconstructed pixel of the color component pixel

S201

Determine an edge class corresponding to a color component pixel based on the extended co-located luma reconstructed pixel and the target classification mode

S202

Reconstruct the color component pixel in the to-be-decoded block based on an offset corresponding to the edge class

S203

FIG. 15

1

| Classification mode information determining module | First class determining module | Encoding processing module |
| --- | --- | --- |

11      12      13

Data processing apparatus

FIG. 16

2

| Decoding processing module | Second class determining module | Pixel reconstruction module |
| --- | --- | --- |

21      22      23

Data processing apparatus

FIG. 17

1000

1001

1002

Processor

Communication
bus

1005

Operating system

Network communication
module

User interface module

Device-control
application

1003

User interface

1004

Network
interface

Display

Keyboard

Memory

Computer device

FIG. 18

## INTERNATIONAL SEARCH REPORT

| International application No. |
| --- |
| **PCT/CN2023/091040** |

**A. CLASSIFICATION OF SUBJECT MATTER**

H04N 19/186(2014.01)i

According to International Patent Classification (IPC) or to both national classification and IPC

**B. FIELDS SEARCHED**

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS, CNTXT, CNKI, VEN, EPTXT, USTXT, WOTXT, IEEE: 编码, 分类, 模式, 颜色, 像素, 扩展, 同位, 亮度, 重建, 中心, 区域, 边界, 补偿, 候选, 率失真优化, 水平, 垂直, 差值, 乘积, 语法, 字段, encode, classify, mode, color, pixel, apposition, luminance, reconstruction, center, area, boundary, compensate, candidate, RDO, horizontal, vertical, difference, product, syntax

**C. DOCUMENTS CONSIDERED TO BE RELEVANT**

| Category* | Citation of document, with indication, where appropriate, of the relevant passages | Relevant to claim No. |
| --- | --- | --- |
| A | CN 113099230 A (ZHEJIANG DAHUA TECHNOLOGY CO., LTD.) 09 July 2021 (2021-07-09)<br>entire document | 1-20 |
| A | CN 113099221 A (ZHEJIANG DAHUA TECHNOLOGY CO., LTD.) 09 July 2021 (2021-07-09)<br>entire document | 1-20 |
| A | CN 111405287 A (HUAWEI TECHNOLOGIES CO., LTD.) 10 July 2020 (2020-07-10)<br>entire document | 1-20 |
| A | US 2012177103 A1 (MEDIATEK INC.) 12 July 2012 (2012-07-12)<br>entire document | 1-20 |
| A | WO 2015083929 A1 (UNIVERSITY-INDUSTRY FOUNDATION (UIF), YONSEI UNIVERSITY) 11 June 2015 (2015-06-11)<br>entire document | 1-20 |
| A | WO 2019194647 A1 (KAONMEDIA CO., LTD.) 10 October 2019 (2019-10-10)<br>entire document | 1-20 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **02 August 2023** | **09 August 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/091040**

| Patent document cited in search report | | | Publication date (day/month/year) | Patent family member(s) | | | Publication date (day/month/year) |
|---|---|---|---|---|---|---|---|
| CN | 113099230 | A | 09 July 2021 | None | | | |
| CN | 113099221 | A | 09 July 2021 | None | | | |
| CN | 111405287 | A | 10 July 2020 | EP | 3907995 | A1 | 10 November 2021 |
| | | | | EP | 3907995 | A4 | 23 February 2022 |
| | | | | CA | 3125500 | A1 | 09 July 2020 |
| | | | | US | 2021329261 | A1 | 21 October 2021 |
| | | | | MX | 2021008151 | A | 11 August 2021 |
| | | | | WO | 2020140700 | A1 | 09 July 2020 |
| | | | | KR | 20210103573 | A | 23 August 2021 |
| | | | | AU | 2019419130 | A1 | 29 July 2021 |
| | | | | JP | 2023071854 | A | 23 May 2023 |
| | | | | JP | 2022516180 | A | 24 February 2022 |
| | | | | JP | 7239711 | B2 | 14 March 2023 |
| US | 2012177103 | A1 | 12 July 2012 | US | 9161041 | B2 | 13 October 2015 |
| | | | | US | 2015124866 | A1 | 07 May 2015 |
| | | | | US | 9432670 | B2 | 30 August 2016 |
| WO | 2015083929 | A1 | 11 June 2015 | US | 2023043350 | A1 | 09 February 2023 |
| | | | | KR | 20150064406 | A | 11 June 2015 |
| | | | | KR | 101530782 | B1 | 22 June 2015 |
| | | | | US | 2016309184 | A1 | 20 October 2016 |
| | | | | US | 10158882 | B2 | 18 December 2018 |
| | | | | US | 2019089983 | A1 | 21 March 2019 |
| | | | | US | 10798413 | B2 | 06 October 2020 |
| | | | | US | 2020374557 | A1 | 26 November 2020 |
| | | | | US | 11425419 | B2 | 23 August 2022 |
| WO | 2019194647 | A1 | 10 October 2019 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022108492507